(19) Europäisches Patentamt
European Patent Office
Office européen des brevets

(11) EP 1 296 260 A1

(12) # EUROPEAN PATENT APPLICATION
published in accordance with Art. 158(3) EPC

(43) Date of publication:
**26.03.2003 Bulletin 2003/13**

(21) Application number: **01941188.3**

(22) Date of filing: **22.06.2001**

(51) Int Cl.[7]: **G06F 17/60**, G06F 17/30

(86) International application number:
**PCT/JP01/05373**

(87) International publication number:
**WO 02/001442 (03.01.2002 Gazette 2002/01)**

(84) Designated Contracting States:
**AT BE CH CY DE DK ES FI FR GB GR IE IT LI LU MC NL PT SE TR**

(30) Priority: **27.06.2000 JP 2000192484**
**21.12.2000 JP 2000389160**

(71) Applicant: **KBMJ Inc.**
**Fujisawa-shi, Kanagawa 252-0804 (JP)**

(72) Inventors:
- **YAMAGUCHI, Tetsuo, c/o IQU Ltd.**
**Fujisawa-shi, Kanagawa 252-0816 (JP)**
- **KIMURA, Takehiro, c/o IQU Ltd.**
**Fujisawa-shi, Kanagawa 252-0816 (JP)**

(74) Representative:
**Manitz, Finsterwald & Partner GbR**
**Martin-Greif-Strasse 1**
**80336 München (DE)**

(54) **INFORMATION SUPPLY SYSTEM**

(57) A ranked information retrieval is supplied over the network. Where a recommendable stock is to be retrieved, for example, the user designates what level of importance is given to each of criteria such as a bankruptcy probability, a ROE or a market share and transmits it to the server The server rates the stock with the financial information supplied in advance calculates a total score on the basis of the rating result and the weighted information received, and sorts to display a list of higher-level 3,000, for example.

Fig. 1

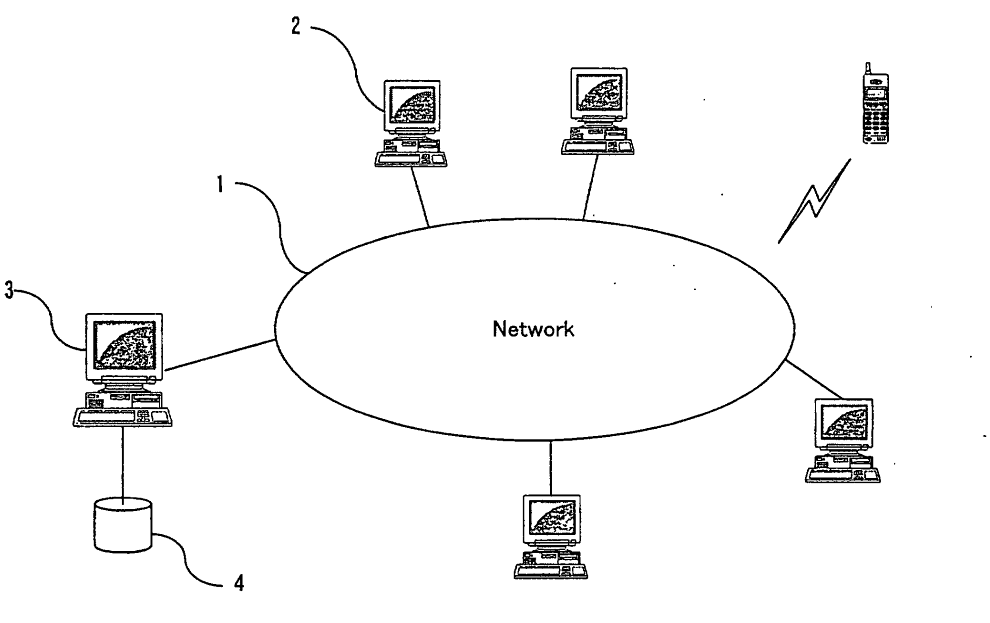




Printed by Jouve, 75001 PARIS (FR)

## Description

### Technical Field

The present invention relates to a system for supplying information according to an individual request from a user over a network, a method therefore, and a storage medium containing a program that may be readable by a computer to execute the method.

### Background Art

In prior arts, an individual having an intention of obtaining various types of information makes inquiries to an information service organization with a telephone, uses Internet or uses books and magazines to collect necessary information. For example, an individual having an intention of purchasing a stock or insurance requests a stockbroker or an insurance company to purchase commodities specified by the individual having an intention of purchasing them or commodities recommended by the stockbroker or the insurance company. Further, information related to commodities such as an automobile and electric apparatus, services such as a hospital and a school, and likes such as perfume and foods, is also collected using Internet and magazines to purchase articles and use services.

The case of obtaining information for stock dealing is hereinafter considered as a specific conventional means to supply information. With regard to stock dealing, an individual having an intention of purchasing a stock requests a stockbroker to purchase a brand specified by the individual having an intention of purchasing it or recommended by the stockbroker. However, there are a large number of types of commodities such as stocks or insurance making it extremely difficult to make judgment for purchase. Further, a long time and a great effort are required to make the judgment. Furthermore, reference materials for making the above-described judgment are specially created for professionals. In general, under such conditions, it cannot be said that an individual investor who tries to purchase a stock may easily make an investment.

Similarly, there are a large number of types of commodities such as automobiles and electric apparatus, hospitals, schools and likes. For a common individual who is not much concerned in insurance, an automobile, electric apparatus and a hospital, and who requires information, judgments for selection, purchase, and usage of the above-described commodities, services and likes have become difficult along with great increase of an amount of information.

Further, when information is retrieved using Internet, information required for a user may be specified by entering a keyword and when an amount of information specified by the keyword is large, however, a long time and a great effect are necessary to judge required information. In addition, a time might be wasted by, for example, nonexistence of requested information. Furthermore, information for the above-described judgement related to a stock or insurance is specially created for professionals as said and also expensive, and an individual who tries to purchase such a commodity therefore may not purchase it easily.

On the other hand, in the case of selecting a hospital or a school, it is difficult to judge the contents of a medical service or schoolwork. Under these circumstances, it cannot be said that an individual who tries to utilize such a service may easily make a selection.

In addition, with regard to likes such as perfume and cosmetics, an individual using specific perfume who tries to select and purchase a next brand sequentially selects brands according to changes of own likes in many cases. In this case, preferably, a parameter whose information is desired to be obtained is efficiently exhibited first to said individual to urge selection. Accordingly, efficient supply of highly satisfactory information for an information receiver has been necessary.

### Disclosure of the Invention

The present invention is made in consideration of the above-described problems. The objective of the present invention is to provide an information supply system, a method to supply information, and a storage medium that may be read by a computer to execute the method. The system makes it possible to shorten a time for judgement by enabling automatic comparative study of brands such as stocks and allow an individual trying to make a purchase, specially an individual investor, to obtain stock price information separately customized according to individual circumstances in consideration of various factors for selection of a brand such as a stock. Furthermore, another objective of the present invention reduces information divide between an individual investor and an organized investor to contribute to forming an efficient and fair capital market.

Further, the objective of the present invention is making it possible to shorten a time for making a judgment by enabling automatic comparative study of companies, stores, hospitals, schools, or commodities or services in a store based on given information and a weighting entered for the given information which is attached importance of, and providing an information supply system for supply of information about a map indicating locations of a company,

a store, a hospital, or a school selected by the comparative study, locations of commodities and the like in a store, and a brand of a like such as perfume or a food, a means to supply information, and a storage medium containing a program that may be read by a computer to execute said means.

## Summary of the Invention

According to the present invention, an information supply system comprising: a server connected to a network and a terminal device which requests said server for information over said network; said server transmits digitized specified information and information ranked using a weighting entered from said terminal device may be provided. Said information supply system comprises a database and said data base stores said digitized specified information. Said server exhibits said ranked information to said terminal device, and may interactively change said ranked specified information and exhibit the same to said terminal device according to a request from said terminal device. Further, said specified information is investment information including a theoretical value, an ups and downs rate, ROE, EPS, PER and PBR for judgment of a bankruptcy probability, and appropriateness of a stock price.

Further, said information supply system comprises a means to digitize said bankruptcy probability, said theoretical value, said ups and downs rate, said ROE, said EPS, said PER and said PBR respectively and a means to rank said investment information using said digitized said specified information and said weighting. Said means for digitization calculates a standard deviation of said specified information. Said means for ranking ranks information by a weighted mean using a standard deviation obtained in relation with said specified information and said weighting. Said means for digitization calculates a deviation value from said standard deviation.

Further, according to the present invention, an information supply method may be provided, said information supply method comprising: a server connected to a network, a terminal device that requests said server for information over said network; a step wherein said server receives a request for information from said terminal device; a step wherein said server receives a weighting from said terminal device; a step wherein specified information is digitized in said server; a step wherein ranking is performed using said digitized specified information and said weighting; and a step wherein said ranked information is transmitted from said server to said terminal device. Said specified information is investment information including a bankruptcy probability, and a theoretical value, an ups and downs rate, ROE, EPS, PER and PBR for judgment of appropriateness of a stock price. Said digitization step calculates a standard deviation of said specified information. Said ranking step ranks information from a weighted mean using a standard deviation obtained in relation with said specified information and said weighting. Further, said digitization step calculates a deviation value obtained from said standard deviation.

Further, according to the present invention, a storage medium containing a program is provided, said program executes: an information supply method comprising a server connected to a network and a terminal device which requests said server for information over said network; a step wherein said server receives a request for information from said terminal device; a step wherein said server receives a weighting from said terminal device; a step wherein specified information is digitized in said server; a step wherein ranking is performed using said digitized specified information and said weighting; and a step wherein said ranked information is transmitted from said server to said terminal device.

Said specified information is investment information including a bankruptcy probability, and a theoretical value, an ups and downs rate, ROE, EPS, PER and PBR for judgment of appropriateness of a stock price. Furthermore, said digitizing step calculates a standard deviation of said specified information. Further, said ranking step ranks information from a weighted mean using a standard deviation obtained in relation with said specified information and said weighting.

Further, according to the present invention, an information supply system comprising a server connected to a network and a terminal device which requests said server for information over said network may be provided, said server contains location information in relation with said information and transmits said digitized specified information, ranked information using a weighting entered from said terminal device, and location information related to said information to said terminal device. Said digitization calculates a standard deviation of said specified information. Said ranking ranks information from a weighted mean using a standard deviation obtained in relation with said specified information and said weighting. Said digitization calculates a deviation value obtained from said standard deviation.

According to the present invention, an information supply method is provided, said information supply comprising: a server connected to a network; a terminal device which requests said server for information over said network; a step wherein said server receives a request for information from said terminal device; a step wherein said server receives said weighting from said terminal device; a step wherein said specified information is digitized; a step wherein ranking is performed using said digitized specified information and said weighting; and a step wherein said ranked information and location information related to said information is transmitted from said server.

Said digitization step calculates a standard deviation of said specified information. Said ranking step ranks information from a weighted mean using a standard deviation obtained in relation with said specified information and said weighting. Said digitization step calculates a deviation value obtained from said standard deviation.

Further, according to the present invention, an information supply system comprising: a server connected to a network; and a terminal device which requests said server for information over said network is provided, said server transmits information ranked using specified information digitized according to a request from said terminal device and a weighting entered from said terminal device to said terminal device, and said server comprises: a means to display information of the highest score of said ranked information and other information on the display screen of said terminal device centered by said information of the highest score; and a means to display information located on a center with regard to a change of said weighting sent from said terminal device and a distance from said center after changing thereof on the display screen of said terminal device.

According to the present invention, an information supply method comprising: a server connected to a network; a terminal device which requests said server for information over said network is provided, said server transmits information ranked using specified information digitized according to a request from said terminal device and a weighting entered from said terminal device to said terminal device, said server comprises: a step wherein information with the highest score of said information ranked by said server and other information are displayed on the display screen of said terminal device centered by said information with the highest score; a step wherein a difference between scores of said information with the highest score and other information is displayed as a distance from the center of the display screen of said terminal device, and a step wherein information located on a center with regard to a change of said weighting sent from said terminal device and a distance from said center after changing thereof are displayed on the display screen of said terminal device.

Further, according to the present invention, a storage medium containing a program that may be read by a computer to execute an information supply method comprising a server connected to a network and a terminal device which requests said server for information over said network is provided, said server transmits information ranked using specified information digitized according to a request from said terminal device and a weighting entered from said terminal device, said storage medium executes: a step wherein information with the highest score of said information ranked by said server and other information are displayed on the display screen of said terminal device centered by said information with the highest score; a step wherein a difference between scores of said information with the highest score and other information are displayed on the display screen of said terminal device as a distance from the center; and a step wherein information located on a center with regard to a change of said weighting sent from said terminal device and a distance from said center after changing thereof are displayed on the display screen of said terminal device.

Brief Description of the Drawings

Fig. 1 shows a schematic diagram showing the investment information supply system according to the present invention.

Fig. 2 shows a diagram showing the terminal device used for the present invention.

Fig. 3 shows a flowchart of the investment information supply means according to the present invention.

Fig. 4 shows a diagram showing the structure of the data used in the present invention.

Fig. 5 shows a diagram showing the structure of the specified information used in the present invention.

Fig. 6 shows a diagram showing the input screen display of the weighting displayed by the investment information supply system according to the present invention.

Fig. 7 shows the screen display that displays a name ranked by the investment information supply system according to the present invention.

Fig. 8 shows a correlation table stored in the server 3 to correlate a weighting expressions and weighting coefficients.

Fig. 9 shows a display window showing a brand ranked by the investment information supply method according to the present invention.

Fig. 10 shows a flowchart of a portfolio support function.

Fig. 11 shows a diagram showing the first embodiment of the information supply system according to the present invention.

Fig. 12 shows a diagram showing the second embodiment of the information supply system according to the present invention.

Fig. 13 shows a diagram showing the terminal device used in the third embodiment of the information supply system according to the present invention.

Fig. 14 shows a flowchart showing the first embodiment of the information supply means according to the present invention.

Fig. 15 shows a diagram showing a data structure of a database stored in a recording means shown in the first

embodiment of the information supply system according to the present invention.

Fig. 16 shows a flowchart in the case of providing a password and an authentication step using a user ID of the information supply system according to the present invention.

Fig. 17 shows a flowchart showing the second embodiment of the information supply means according to the present invention.

Fig. 18 shows a diagram showing the data structure of the database stored in the recording means shown in the second embodiment of the information supply system according to the present invention.

Fig. 19 shows a diagram showing how to operate a communication means of the information supply system according to the present invention.

Fig. 20 shows a diagram showing an operation screen of a display screen of the communication means of the information supply system according to the present invention.

Fig. 21 shows a diagram showing a display window wherein a pachinko machine (Japanese pinball machine) is ranked on the display screen of the communication means of the information supply system according to the present invention.

Fig. 22 shows a diagram showing an image of the pachinko machine and a location of the pachinko machine in a store displayed on the display screen of the communication means of the information supply system according to the present invention.

Fig. 23 shows a diagram showing operation windows in an operating sequence on the display screen of the communication means of the information supply system according to the present invention.

Fig. 24 shows a diagram showing operation windows in an operating sequence on the display screen of the communication means of the information supply system according to the present invention.

Fig. 25 shows a diagram showing information display on the information supply system according to the present invention.

Fig. 26 shows a diagram showing a data structure used for the information display means according to the present invention.

Fig. 27 shows a diagram showing information display on the information supply system according to the present invention.

## Best Mode for Carrying Out the Invention

The present invention is hereinafter described in details based on examples with reference to drawings. Embodiments of the present invention, however, are not limited to the examples shown in the drawings.

Fig. 1 depicts a schematic diagram showing the information supply system according to the present invention. The information supply system according to the present invention generally comprises a multiplicity of terminal device connected over a network 1 and a server 3 for ranking and supplying information according to a request transmitted from a terminal device 2 over the network 1.

For example, a terminal device 2 is installed in a place of an individual trying to buy a stock, that is to say, a user's residence, a stockbroker, an insurance company, or a bank and a server 3 may be accessed over the network 1 to obtain information related to stock trading. This terminal device 2 transmits a signal to the server 3 via appropriate browser software to request for supply of information. Further, this terminal device 2 is structured to transmit a weighting for specified information entered by a user according to necessity for investment.

So called Internet is an example of a network 1 according to the present invention. Any network other than Internet may be used as long as being capable of remotely transmitting and receiving information by a communication using an appropriate communication protocol such as LAN or WAN. For example, TCP/IP may be used as a communication protocol and the usable communication protocol, however, is not limited thereto, any other communication protocol may be used in the present invention.

A request for the investment information thus transmitted is received to the server 3, and the server 3 uses the specified information and the weighting stored in a storage device 4 in the server 3 to rank a stock brand. Various types of raw data items related to of stock brands such as financial data required to rank a stock brand such as financial information, stocks data and enterprise data are stored in the storage device 4. In the present invention data directly used for ranking such as ROE described later is generated from the above-described row data and held in a database stored in the storage device 4.

Further, when information about a company, a store, a hospital and a school is supplied according to the present invention, the server 3 uses the specified information or the weighting to rank items stored in the storage device 4 in the server 3 such as a company, a store and a hospital. An individual request for the information, that is, a user may enter a weighting for ranking according to the present invention and may rank the items with attaching importance of the weighted specified information. Rankings of the items such as a company, a store, a hospital and a school obtained from the specified information and the weighting are transmitted to the terminal device to which issued the

request, and the user may select an item according to a ranking thereof. Further, when a ranked items such as a company, a store, a hospital or a school is selected, information about a location such as a map , a telephone number and the like related to the company, the store, or the school are displayed in the terminal device.

The above-described ranking may be performed in many ways in the present invention. When the user obtains investment information according to the present invention, the user may customize the investment information according to conditions such as an amount of funds, a type of a market, a type of an industry and the number of possessed stocks by use own. A enterprise ranking obtained from the specified information and the weighting is transmitted to the terminal device 2 which issued the request and displayed on a display screen of the terminal device 2 to make it possible for an individual requesting for the investment information to decide a brand to be purchased based on the ranking.

Fig. 2 is a diagram showing the terminal device 2 used for the present invention in details. The terminal device 2 usable for the present invention structurally comprises both or either of a computer and a cellular phone. Fig. 2 shows the terminal device 2 comprising a personal computer or a workstation. For the present invention, however, a mobile computer may also be used as a terminal device. A CPU such as PENTIUM (trademark of Intel Corporation) or a CPU compatible with thereof may be mounted as the personal computer or the workstation shown in Fig. 2, and a personal computer or a workstation capable of operating an operating system such as WINDOWS (trademark of Microsoft Corporation), WINDOWS NT (trademark of Microsoft Corporation), OS/2 (trademark of International Business Machines Corporation), AIX (trademark of International Business Machines Corporation), UNIX or LINUX may be exemplified. The applicable personal computer or the applicable workstation, however, is not limited to the above-described products, any other personal computer or workstation may be used in the present invention.

Further, for the present invention, the same personal computer, the same workstation, or a general-purpose mainframe computer may also be used for the server 3.

Appropriate browser software is installed in the terminal device 2, and is capable of performing communications with the server 3 over the network 1 such as Internet. The present invention will be described hereinafter with reference to specific embodiments used to supply information.

<Investment Information Supply System and Investment Information Supply Method>

Fig. 3 shows a flowchart for supplying investment information using the information supply method according to the present invention. A process of supplying the investment information by the information supply method according to the present invention begins from a step S1, then a top page showing a start of the investment information supply method according to the present invention is displayed on a display window of a terminal device 2 via appropriate browser software in a step S2. This top page may be named, for example, "stock devil". Thereafter, the process proceeds to a step S4 wherein a weighting for each item is entered from the terminal device 2 for stock evaluation. The weighting entered in the step S4 is transmitted from the terminal device 2 to a server 3, and the server 3 which received the weighting uses specified information and the weighting to rate, that is to say, rank (weight) a stock brand in a step S5.

Various types of information may be used as the specified information used for the above-described processing. For example, a bankruptcy probability, an amount of alienation from a theoretical value, ROE, an ups and downs rate, a market share, EPS, PER and PBR may be exemplified. Multiple items of the such specified information are combined in use to improve a reliability of the supplied investment information. The above-described combination of specified information items is not specially limited, but two to eight types may appropriately be selected and used. Further, in the present invention, any known information items other than the above-described information items may be used in combination. In this case, types of information to be combined is not limited to eight types.

The above-described information items, financial data and stock price data may be stored in, for example, the server 3 in addition to enterprise data that may be obtained from a database such as "Reuter Broomburg" (trademark). According to the present invention, however, the above-described enterprise data, financial data and stock price data may be created or entered by any other means such as manual entry.

Each of the above-described specified information item used to rank the investment information may specifically be calculated and digitized from the formula given below.

(1) Bankruptcy probability

$$EDF = N\left(\frac{\ln(B_T) - [\ln(A_0) + (\mu_A - \frac{\sigma_A^2}{2}) \cdot T]}{\sigma_A \cdot \sqrt{T}}\right)$$

Variables in the above formula are defined as follows:

EDF = Bankruptcy probability of a enterprise
N(z) = Accumulated density function of a standard regular distribution
$B_T$ = Book value of a debt at a due date
$A_0$ = Current asset value
$\mu_A$ = Expected growth rate of an asset
$\delta_A$ = Volatility of an asset
T = Due date of a debt
$B_T$ = Debt item in a balance sheet

$A_0 = B_0 + E_0$
$= B_0 + (S_0 \cdot N_0)$
= Book value of current debt + (Current stock price*number of already-issued stocks)

$\mu_A = X_E \cdot \mu_E + (1 \cdot X_E) \cdot \mu_B$
$= X_E \cdot \mu_E$ (Where the growth rate of a debt $\mu_B$ is assumed to be 0.)
= Averages of funds in hand rate and investment earnings rate of stocks in past 90 business days

$\sigma_A = X_E^2 \cdot \sigma_E^2 + (1 \cdot X_E)^2 \cdot \sigma_B^2 + 2 \cdot X_E \cdot (1 \cdot X_E) \cdot \sigma_E \cdot \sigma_B \cdot \rho_{EB}$
$= X_E^2 \cdot \sigma_E^2$ (Where the volatility of a debt $\delta_B$ is assumed to be 0.)
= (Funds in hand rate)$^2$*(Standard deviation of investment earnings rate of stocks in past 90 business days)$^2$

Where T is assumed to be 1.
Further, N(z) in the above formula is represented by the following formula:

$$N(z) = \frac{1}{\sqrt{2\pi}} \cdot e^{\frac{z^2}{2}}$$

Further, the investment earnings rate of stocks ($u_I$) and the volatility of stocks are given by the following formulae respectively:

Investment earnings rate of stocks = In (Today's stock price/Yesterday's stock price) x 250

$$\text{Volatility of stocks} = \sqrt{\frac{1}{n-1}\cdot\sum_{i=1}^{n}u_i^2 - \frac{1}{n(n-1)}\left(\sum_{i=1}^{n}u_i\right)^2} \times \sqrt{250}$$

Further, the logical price of a stock included in the above-described specified information may be obtained from the following formula:

$$P_0 = \frac{d_0 \times g}{r\text{-}g}$$

$P_0$ = Logical stock price
$d_0$ = Dividend of this term
$g$ = Sustainable growth rate
$r$ = Requested expected earnings rate of stocks

In the above formula;

g = ROE*(1-D/E[Dividend of this term/Profit after taxation of this term])

r = Requested expected earnings rate of stocks = Risk free rate + Beta of corresponding stocks*(Earnings rate of market-Risk free rate)

The above-described ups and downs rates may be obtained from the following formulae:

Ups and downs rate of 1 day = In (Today's stock price/Previous day's stock price) x 100

Ups and downs rate of 1 week = In (Today's stock price/Previous week's stock price) x 100

Ups and downs rate of 1 month = In (Today's stock price/Previous month's stock price) x 100

Further, ROE may be obtained concretely from the following formula:

ROE = Net profit/Stock holder's funds

The price earning rate (PER) included in the above-described information may be obtained from the following formula:

PBR (Price book-value ratio) = Stock price ÷ Stock holder's funds per stock

Stock holder's funds per stock = Stock holder's funds ÷ Number of already-issued stocks

PBR = Price Book-Value Ratio

EPS included in the above-described information is represented by the following formula:

EPS (earnings per share) = Profit after taxation ÷ Number of already-issued stocks

EPS = Earnings Per Share

Specified information calculated from the above-described formulae is held in the database contained in the server 3, and numeric data obtained from this specified information is used to calculate a standard deviation for each stock brand. Next, the standard deviation is used to rate each information item. For example, up to five higher-level percent is rated to 10 and five lower-level percent is rated to 1.

Fig. 4 shows a structure of data corresponding to specified information stored per stock brand held in a database stored in the storage device 4 according to the present invention. In the present invention, raw data including a stock brand, a market type, enterprise data, financial data and stock price data are stored in the database stored in the storage device 4 such as database. In the present invention, this raw data is used to apply each of the above-described formulae, calculate specified information and a standard deviation thereof, and perform relative rating using a value such as a deviation value.

Fig . 5 shows the specified information calculated based on the above-described data. As shown in Fig. 5, in the present invention, calculated data including a bankruptcy probability, a logical value of stock price appropriateness, an ups and downs rate and ROE corresponding to each stock brand are stored. Thereafter, the investment information supply means according to the present invention uses the rating obtained as described above and a weighting entered from the terminal device 2 for final ranking by, for example, calculating a weighted mean in a step S6. Further, a deviation value calculated from the standard deviation may directly be used for the above-described rating. When this deviation value is obtained, any means to set a mean value to deviation value 50 and to a greater value than 50 for a higher-level or to a fewer value than 50 for a lower-level based on a difference from the mean value and the standard deviation. Furthermore, a normal distribution need not specially be assumed when using another distribution.

Accordingly, for ranking of a stock brand finally exhibited to the user, order ranking may be changed according to specified information which the user attaches importance of and is not always a ranking calculated from the specified information. Furthermore, specially a higher-level ranking differs for each user. Consequently, the most appropriate stock brand meeting user conditions is always ranked to a higher-level.

Further, any methods other than the weighting may be used for final ranking. Still further, a weighting may either be used by standardizing thereof so that a total sum of weightings becomes 1 or without specially standardizing thereof.

Thereafter, the investment information supply means according to the present invention sorts an order of brands according to rankings in a step S7 and displays the brands on the terminal device 2 in a step S8. The user clicks a field showing enterprises noticed in a step S9 from brands displayed on the display screen of the terminal device 2, outputs information of enterprises to obtain required investment information in a step S10 and then the investment information supply method according to the present invention ends. Here, enterprises ranked to ranking 1 to ranking 3000 are displayed in the step S8 for example. The rankings are, however, not limited to ranking 1 to ranking 3000 in the present invention and the number of rankings may either be increased or decreased according to the capability of the terminal device 2.

Further, the information supply method according to the present invention shown in Fig. 3 has a structure allowing a general user in a wide field to access the server 3 without establishing a public key such as a user ID or a secret key access restriction such as a password. In the present invention however, a user access may be restricted by requesting for registration when a user accesses the server 3 and giving a user ID and a password corresponding to registered data. In this case, the user may be charged according to information supply.

Fig. 6 shows a display window displayed by appropriate browser software on the display screen of the terminal device 2 by the investment information supply system according to the present invention over the network 1. The user enters a weighting of information which the individual user attaches importance of from the display screen shown in Fig. 6. For example, when the user attaches importance of a bankruptcy probability and sets a weighting of the bankruptcy probability; (1) when the user uses an appropriate pointing means such as a stylus or a mouse to click a field 6 showing the bankruptcy probability or when the user positions the pointing means on said field, the display indicating the weighting is displayed on the display. When an individual having an intention of purchasing a stock selects, for example, "attach importance of", a number corresponding to thereof is determined as a weighting.

Fig. 7 is a diagram showing a display screen whereon a weighting expression is displayed by using, for example, a mouse to click the field 6. In the field from which the user enters a weighting, a weighting expressions such as "attach much importance of", "attach importance of", "neither attach importance of nor attach no importance of", "attach less importance of" and "attach no importance of". These expressions are not always required in the present invention, but any expression may be used and a weighting expression of any number may also be used.
Fig. 8 shows a correlation table stored in the server 3 to correlate a weighting expressions such as "attach importance of ", "attach much importance of", "neither attach importance of nor attach no importance of", "attach less importance of" and "attach no importance of" and weighting coefficients. In this correlation table, weighting coefficients 5 corresponding to "attach much importance of", 4 corresponding to "attach importance of", 3 corresponding to "neither attach importance of nor attach no importance of", 2 corresponding to "attach less importance of" and 0 corresponding to "attach no importance of" are used and weighted for each deviation value to calculate a weighted mean for the deviation value.
Weighting values used for the above-described processing are not limited to the values shown in Fig. 8, but any values may be used. For well-balanced ranking however, weighting values may also be selected so that a total sum of weighting values given to various types of information becomes 1. Further, a weighting value may also be determined by really entering a number instead of a display such as "attach importance of" as described above. After the above-described selections are performed for the various types of information, weighting information is transmitted from the terminal device 2 to the server 3 and ranked on the server 3.
Fig. 9 shows a display window showing a brand ranked by the investment information supply method according to the present invention. As shown in Fig. 9, the investment information supply method according to the present invention displays the ranked brand with the code thereof, a market wherein the brand is registered, the brand name, an order and a score resulted from ranking, and related information. An individual having an intention of purchasing a stock may obtain more detailed information by clicking a related information field 7 showing the enterprise shown in Fig. 9.
Fig. 10 is a flowchart showing a portfolio support function that may be provided by the investment information supply system according to the present invention. This portfolio support function begins from a step S15 and displays a top page named, for example, "stock devil" on the display screen of the terminal device 2 in a step S16. Thereafter, the portfolio support function proceeds to a step S17 and requests for entry of a brand composing a portfolio of a customer who uses the terminal device 2 for entry. Furthermore, in a step S18, the portfolio support function calculates a stock price mean value, that is to say, a return and a standard deviation, that is, a risk at the time from, for example, a progress of a change rate of a total quotation amount in past 90 business days of the brand composing the portfolio. The customer may select past business days from 30 days, 60 days, 90 days, 120 days, 180 days and 250 days and any other business days however may be used in the present invention.
Subsequently, the portfolio support function proceeds to a step S19 and calculates correlation functions between change rates of the total quotation amount and stock prices for all brands. Thereafter, the portfolio support function requests for entry of a purchase budget amount for additional stocks to be purchased.
Subsequently, the portfolio support function proceeds to a step S21 and calculates a portfolio after the additional purchase and graphically displays a return and a risk in the case of purchasing a specific brand of all brands on the display screen of the terminal device 2.
Formulae may be appropriately selected and used for the above-described processing. In the present invention, the following formulae, for example, may be used:

$$R_P=W_1R_1 + W_2R_2$$

$$\sigma_P=W_1\sigma_1 + W_1\sigma_2 + W_1W_2\sigma_1\sigma_2\rho_{12}$$

(Where $R_P$ is a return of a new portfolio, $W_1$ is an amount rate in the new portfolio against an old portfolio, $R_1$ is a return of the old portfolio, $W_2$ is a rate of an additional stocks budget amount in the new portfolio, $R_2$ is a return of additional stocks, $\sigma_P$ is a risk of the new portfolio, $\sigma_1$ is a risk of the old portfolio, $\sigma_2$ is a risk of additional stocks and $\rho_{12}$ is a correlation coefficient between the old portfolio and a stock price earnings rate of additional stocks.)
Furthermore, the portfolio support function proceeds to a step S22 and displays brands as points on the display screen of the terminal device 2. Subsequently, the portfolio support function goes to a step S23, then the user displays a brand to which a risk and a return desired by the user is given by clicking a point in consideration of the risk and return and decide an additional brand to be purchased and exit from the portfolio support function in a step S24.
An individual having an intention of purchasing a stock may easily select an additional brand to be purchased with an appropriate risk and an appropriate return by using the above-described portfolio support function according

to the present invention.

<Information Supply System and Information Supply Method for Supplying Location Information with Ranking Information>

Fig. 11 shows a diagram of the second embodiment of the information supply system according to the present invention. In the embodiment shown in Fig. 11, the information supply system comprises a multiplicity of terminal device 2 connected over a network 1 and a server 3 which receives a request transmitted from the terminal device 2 over the network 1, and ranks and supplies information about the request. Further, information required for ranking by the server 3 may be obtained from a storage device 4 stored in the server 3.

Location information 9 related to requested information indicating locations of a company, a store, a hospital or a school, or a location in a pachinko parlor where a desired pachinko machine is located is stored in the storage device 4 in the server 3 in addition to specified information 8 required for ranking. This location information 9 may be stored as a map for a company, a hospital, a store or a school, or may be stored as a layout diagram of machines or machine types for an amusement place such as a pachinko parlor or a game center.

In the embodiment shown in Fig. 11, the terminal device 2 is installed in, for example, in a place of an individual requesting for information, that is to say, auser's residence, a company or a school, and the server 3 may be accessed over the network 1. This terminal device 2 transmits a signal to request for information required by the user to the server 3 via appropriate browser software. Further, the terminal device 2 has a structure to transmit a weighting to the server 3 for specified information selected by the user according to necessity. Furthermore, in the embodiment shown in Fig. 11, a mobile terminal such as a mobile computer or a cellular phone may be used as a terminal device 2.

Internet may be exemplified as the network 1 according to the present invention as described in the first embodiment shown in Fig. 1. Any network, however, may be used as long as being capable of remotely transmitting and receiving information by using an appropriate communication protocol such as an optical communication or LAN/WAN. A communication protocol such as TCP/IP may be used as the communication protocol and a usable communication protocol however is not limited to thereof.

The information thus transmitted is received by the server 3, and the server 3 uses specified information and a weighting to rank items stored in the storage device 4 in the server 3 such as a company, a store, a hospital and a school. These items may be ranked by various procedure. In this invention however, an individual requesting for information, that is, the user may enter a weighting and may rank the items attaching importance of weighted specified information. Rankings of items such as a company, a store, a hospital and a school obtained from the specified information and a weighting are transmitted to the terminal device 2 which issued the request, then the user may select an item according to a ranking thereof. Further, when a ranked item such as a company, a store, a hospital or school is selected, information related to a location to the company, the store, the hospital or the school such as a map and a telephone number thereof are also displayed.

Fig. 12 shows a diagram of the third embodiment of the information supply system according to the present invention. In the embodiment shown in Fig. 12, the terminal device 2 and a computer system 5 are directly interconnected without via a network such as Internet and conFig.d so that the user may operate the terminal device 2 in a store or an amusement place wherein the terminal device 2 is installed. In the embodiment shown in Fig. 13, a request transmitted from the terminal device 2 is received by the computer system 5, The computer system 5 ranks requested information using a weighting entered by the user and transmits the information back to the terminal device 2 to supply he information by displaying the same in the display screen of the terminal device 2. Further, information required for ranking by the computer system 5 may be obtained from a storage device 4 stored in the computer system 5.

In the specific embodiment shown in Fig. 12, the location information 9 related to the requested information indicating a location where a desired machine or machine type is located in a pachinko parlor or a game center is stored in the storage device 4 in the computer system 5. Further, this location information may be the layout diagram of pachinko machines or game machines in the pachinko parlor or the game center.

Further, a personal computer of a panel-touch type that can easily be operated by the user may be exemplified as the terminal device 2. Any other device such as the above-described personal computer however, may also be used as long as being capable of transmitting a signal to request for supplying information and a weighting entered by the user to the computer system 5 and receiving ranked information.

The request for information transmitted from the terminal device 2 shown in Fig. 12 is transmitted to the computer system 5, and the computer system 5 uses specified information 8 and a weighting to rank a machine or a machine type stored in the storage device 4 in the computer system 5. By this ranking, information of a location or a place of a machine or a machine type in a store may be displayed when the user may enter a weighting and select a ranked machine or a ranked machine type in the same manner as the embodiment shown in Fig. 1. The present invention is not limited to a pachinko parlor and a game center, and may be applied to selection of a book or a videotape in a library or rental videotape store.

Fig . 13 shows a schematic diagram of the terminal device 2 used in the second embodiment of the information supply system according to the present invention in details. A personal computer or a personal computer of a touch-panel type may be exemplified as the terminal device 2 that can be used in the embodiment shown in Fig. 13. In the embodiment shown in Fig. 13 however, only a monitor of a touch-panel type is implemented as the terminal device 2 and information selected by touching a monitor screen according to an instruction displayed on the terminal device 2 is transmitted to the computer system 5.

Further, when a personal computer is used as the terminal device 2, a personal computer capable of operating the above-described CPU and the above-described operating system may be used.

Further, in the embodiment shown in Fig. 13, an instruction is displayed in a format of a question from the computer system 5 through the touch-panel type monitor shown in Fig. 13, then the user touches an item with a finger according to the instruction to enter a weighting and transmits information back to the computer system 5. A ranking in consideration of the transmitted information and the weighting is displayed with appropriate location information on the touch-panel type monitor.

Fig. 14 shows a flowchart of the second embodiment of the information supply method according to the present invention. The information supply means shown in Fig. 14 begins from a step S25 and displays a top page on the display screen of the terminal device 2 via appropriate browser software to indicate the start of the information supply method according to the present invention. Subsequently, the information supply method proceeds to a step S27 and allows the user to select a category. Selectable categories may include; stocks, movies, videos, houses, encounter, culture centers, convenience stores, Internet providers, investment trust companies, credit cards, mobile telephones, doctors, stockbrokers, banks, telephone service company, medical supplies, automobiles, electric apparatus, clothing, bags, shows, clocks, jewelry, schools, employment, leisure, books, restaurants, travel, insurance, airlines, child raising, motorcycles, stationary, foods, pachinko, game centers, sports centers and ticket sales.

These categories may also be entered by the user instead of being selected interactively. When the information supply method proceeds to the step S26 to the step S27, a user may be specified using an authentication step with a password and/or a user ID to charge the user according to information supply.

Thereafter, the information supply method proceeds to a step S28, then allows to the user to select specified information in relation to a selected category. Subsequently, the information supply method proceeds to a step S29, then the user inputs from the terminal device 2 a weighting for the selected information to evaluate the information. Further, the specified information selected in the step S28 is transmitted from the terminal device 2 to the server 3, and the server 3 which received the specified information performs rating in a step S30. Furthermore, the weighting entered in the step S29 is transmitted from the terminal device 2 to the server 3 in the same manner as transmitting the specified information, and the server 3 which received the weight uses the specified information rating in the step S30 and the weighting for ranking in a step S31.

Various types of information may be exemplified as the specified information used at this time. For example, a unit price, a price after bargaining, a sales amount of the store, a distance to the store and popularity may be exemplified. Further, different information may be included as the specified information according to a selected category. Further, any known calculation method may be used to calculate the above-described information. Furthermore, multiple items of the specified information are combined in use, the combination is not specially limited and any items may appropriately be selected and used. Further, in the present invention, any known information items other than the above-described information items may be combined in use.

The rankings of items such as a company and a store in relation with a selected category according to the present invention particularly uses a database stored in the storage device 4 in the server 3 to calculate a numeric value corresponding to the specified information and then calculate a standard deviation of each specified information item. For example, a unit price, a price, a sales amount or a distance may be digitized. The popularity which may not be digitized may, however, be digitized by amounts of sold commodities. Further, the digitized number of votes of users may also be used. Further, a rating may be added to each specified information item using the standard deviation assuming that a total score is 10 and, for example, up to five percent of higher-levels is rated to 10 and up to five percent of lower-levels is rated to 1.

Fig. 15 shows a tree structure of a database stored in the storage device 4 used in the embodiment shown in Fig. 11. Data such as a company, a store, sales amount data of a company or a store, price data of each commodity, popularity data of each commodity, a map showing a location of a company or a store and a telephone number is stored in the storage device 4 shown in Fig. 15. In the data structure shown in Fig. 15, categories such as an automobile, a house, a stock, and insurance may be stored in a storage layer 101. In each category by the user, when an automobile, for example, is selected as a category, specified information including a price, a design and fuel consumption for user selection is stored in a storage layer 102. Further, in the specified information, automobile types including a car A and a car B are stored in a directory 103. Dealers including a store A and a store B which sell the car types are stored in a storage layer 104. Furthermore, when a price is selected from the specified information, numeric data such as a sales quantity is stored in a storage layer 105 for the number of sold commodities.

Any type of a data structure other than the data structure shown in Fig. 15 may be used as long as various types of data may be arranged and stored using thereof.

In the present invention, the specified information may be digitized using the above-described data. The specified information for each company or each store is extracted as a numeric value from the storage device 4 for the specified information selected by the user. The specified information may be extracted from the storage device 4 according to a category or a formula may be stored in the server 3 and the specified information may be digitized using the stored formula. Further, in the present invention, a deviation value of each information item is calculated using each of the above-described data item. The deviation value thus calculated is weighted with the weighting entered by the user. A weighted ranking is changed by specified information which the user attaches importance of, however, a ranking is not always calculated only from specified information. Therefore, the most appropriate information satisfying user conditions is always ranked to a higher-level.

The information supply method according to the present invention then uses the rating thus obtained and the weight entered by the user from the terminal device 2 to calculate a weighted mean for final ranking in a step S31. For example , when ratings for specified information related to a specific store are assumed to be $F_1$, $F_2$, $F_3$, F4, ..., and weightings are assumed to be $a_1$, $a_2$, $a_3$, $a_4$, ..., then a weighted mean $X_1$ is calculated from the following formula (1):

$$x_i = \frac{\sum_{i=1}^{n} a_i F_i}{\sum_{i=1}^{n} a_i} \quad (1)$$

In the present invention, weighted values of a store A, a store B, a store C and a store D are calculated using the formula (1), sorted by values of weighted mean values to rank the stores. Further, the above-described rating may not always be a simple numeric value, but a deviation value calculated from a standard deviation may directly be used. When this deviation value is obtained, the mean value may be set to a deviation value of 50, to a greater value than 50 for a higher-level, and to a fewer value than 50 for a lower-level based on a difference from the mean value and the standard deviation. The deviation value may be calculated from any distribution other than the above-described regular distribution as long as ranking is possible from the other distribution.

Further, the weighting may be standardized so that the total sum of weightings becomes 1 as described above in use. Thereafter, the information supply means according to the present invention sorts an order of information items such as commodities and services according to rankings in a step S32 and displays the rankings on the terminal device 2. When the user selects an item from company or store information displayed on the display screen of the terminal device 2 by clicking or touching a field showing information of an interesting company or an interesting store, a map may be displayed with required information in a step S35. When the user obtains the required information, the information supply method according to the present invention ends in a step S36.

This information including the map may also be printable by a printer installed separately from the terminal device 2 and connected to the terminal device 2. In the flowchart shown in Fig. 14, rankings 1 to 5 may be displayed. The user may, however, select a display sequence, and any ranking sequence such as rankings 1 to 50 may be displayed. Further, a company, a store and other data stored in the server 3 may be stored in a database instead of the storage device 4.

Fig. 16 shows a flowchart of the case of establishing the above-described authentication step with a password and a user ID for the information supply method according to the present invention shown in Fig. 14. In the flowchart shown in Fig. 16, the authentication step with a password or a user ID is established as a step S37 between the step S26 and the step S27 in the flowchart shown in Fig. 14. The information supply method according to the present invention shown in Fig. 16 begins with the step S25 in the same manner as that of the information supply method shown in Fig. 14 and displays a top page on the display screen of the terminal device 2 via appropriate browser software to indicate the start of the information supply method according to the present invention in the step S26. Subsequently, the information supply method proceeds to a step S37, then the user enters a password or a user ID provided to the user beforehand. When the entered password or the entered user ID is authenticated, "YES" is selected and the information supply means goes to the step S27 and to the step S28 in the same manner as that in the flow chart shown in Fig. 14.

When the password or the user ID is not authenticated or the user does not have a password or a user ID (no), the information supply method proceeds to a step S38. When a password or a user ID is desired to be obtained

in the step S38 (yes), the method proceeds to the step S38 and take specified procedures in a step S39. Further, by going to the step S37 again after the password or the user ID is obtained and entering the obtained password or the obtained user ID to be authenticated, if so (yes), the process proceeds to the step S27 and the step S28.

Further, in Fig. 16 , when the user already has a password or a user ID and the password or the user ID is, however, not authenticated or when the user does not obtain a password or a user ID in the step S37, the information supply method according to the present invention may be terminated by selecting "NO" in the step S38 . When the user owns a password or a user ID and the password or the user ID is, however, not authenticated in the step S37, the information supply means according to the present invention may return to the step S26 to have the user reenter the password or the user ID.

Fig. 17 shows a flowchart of another embodiment of the information supply method according to the present invention. The information supply method shown in Fig. 17 begins with a step S41 and displays a top page on the display screen of the terminal device 2 via appropriate software in a step S42 to indicate the start to the user. Subsequently, the information supply method proceeds to a step S43 and allows the user to select specified information.

Thereafter, the information supply method proceeds to a step S44, then allows the user to input weighting is from the terminal device 2 for each specified information item to evaluate the information. The weighting entered in the step S44 is transmitted from the terminal device 2 to a computer system 5, and the computer system 5 which received the weighting uses the specified information and the weighting for ranking in a step S45.

Various types of information including, for example, a price, popularity, interest and difficulty or easiness for selecting a book in a bookstore may be exemplified as the specific information used this time. Multiple items of the specified information are combined in use in the same manner as that shown in the first embodiment shown in Fig. 14. Further, the combination is not specially limited and information items may appropriately be selected and used. Further, any known information items other than the above-described information items may be combined in use. Furthermore, the specified information may also be entered by the user in addition to being selected by the user. For ranking of an item such as a commodity or a service in relation with a selected category according to the present invention particularly a database in the storage device 4 in the computer system 5 is used to calculate a numeric value corresponding to the specified information to calculate a standard deviation of each type of specified information. For example, popularity, interest or difficulty or easiness which may not be digitized may, however, be digitized by the number of sold commodities or the number of user votes. Still further, a rating may be given to each type of specified information using a standard deviation. For example, up to five percent of higher-levels is rated to 10 and five percent of lower-levels is rated to 1.

Fig. 18 shows a structure of a database stored in the storage device 4 used in the embodiment shown in Fig. 12. Data including a book name, price data, popularity data, and location information about books in a store is stored in the database stored in the storage device 4 shown in Fig. 18. In the data structure shown in Fig. 18, genres including a novel, a technical book, a reference book and a magazine are stored in a storage layer 201. When a novel, for example, is selected, genres including a love romance, a mystery and a history are stored in a storage layer 203 and a location information about the novel in a store is also stored. Furthermore, numeric data including a sales quantity of the novel, a result of a popularity vote and an interest is stored in a storage layer 204. Information hard to be digitized stored herein such as an interest may however be digitized by the number of user votes as described above. Any type of a data structure other than the data structure shown in Fig. 18 may be used as long as various types of data may be arranged and stored using thereof.

In the embodiment shown in Fig. 18, information is digitized shown in the embodiment shown in Fig. 16. Specified information selected by the user is extracted as a numeric value from the storage device 4. In the present invention, the numeric value for the specified information may be calculated using the formula that has been stored in the storage device 4. Further, a deviation value for the specified information is calculated using these data items. The deviation value thus calculated is weighted by a weighting entered by the user. In this embodiment also, a ranking of the weighted deviation value is changed according to specified information which the user attaches importance of, but is not always the ranking calculated from the specified information. Therefore, the most appropriate information satisfying user conditions is always ranked to a higher-level.

Thereafter, the information supply method shown in Fig. 17 uses the rating obtained by the above-described means and the weighting entered from the terminal device 2 to calculate a weighted mean for final ranking in a step S46. When this deviation value is obtained, a mean value may be set to the deviation value of 50, to a greater value than 50 for higher-level and to a fewer value than 50 for lower-level based on a difference from the mean value and a standard deviation. The deviation value may be calculated from any distribution other than the above-described regular distribution as long as the deviation value may be ranked from the other distribution.

Furthermore, a weighting may be standardized in use so that a total sum of weightings becomes 1. Thereafter, the information supply method shown in Fig. 17 sorts a sequence of items such as a commodity according to rankings in the step S47 and displays the rankings on the terminal device 2 in a step S48. When the user selects an item from the information displayed on the display screen of said terminal device 2 by clicking or touching the field showing said

information in a step S49, location information is displayed with required information in a step S50. Thereafter, in the present invention, appropriate information is provided for the user and then the information supply method according to the present invention ends in a step S51.

The above-described location information may be printable by a printer installed separately from the terminal device 2 and connected to the terminal device 2. Further, rankings from 1 to 5 may be displayed or the user may select a display sequence, and any ranking sequence such as rankings 1 to 50 maybe displayed. Further, data including a commodity stored in the storage device 4 in the computer system 5 may be stored in any database.

The operating procedure of the terminal device 2 by the user will be described hereinafter with reference to Fig.s 19 to 22. The operation procedure may be, however, not limited to those shown in the Figs. 19-22. Fig. 19 shows a diagram of an operation procedure for the terminal device 2 of the information supply system according to the present invention. The terminal device 2 shown in Fig. 19 is used for the information supply system according to the present invention shown in Fig. 12 and configured as a touch-panel type monitor installed, for example, at an entrance of a pachinko parlor. This terminal device 2 is connected to a computer system (not shown) to collect information related to pachinko machines and the like. Further, in Fig. 19, a selection field is displayed on a display screen 10 of the terminal device 2. As shown in Fig. 19, information requested by the user may be ranked by the user selecting a way of touching the display screen 10 with a finger according to an instruction displayed on the display screen 10 of the terminal device 2.

Fig. 20 is a detailed diagram showing an operation window displayed on the display screen of the terminal device 2 shown in Fig. 19. Information requested by the user may be selected from the window shown in Fig. 20 in a question format. When the information is selected, the next window appears. In the embodiment shown in Fig. 20, five options are displayed according to playing times of the user. As shown in Fig. 20, the number of options may be more or less than five and a method of having the user to enter a play time may also be used. Further, when an entry error occurs or a time is changed, the display returns to the top page by touching the "return to beginning" field under the displayed window.

Fig. 21 shows a diagram of a field wherein slot machine types are ranked according to information selected by the user. A ranking finally obtained after touching the operation window shown in Fig. 20 is shown in Fig. 21. In the embodiment shown in Fig. 21, machine type names are displayed with rankings of up to ranking 5. In the present invention however, an order of machine types higher than the machine types shown in Fig. 21 may be provided. Further, the "return to beginning" field may be touched to return to the top page in the case when reselection is required due to a change of the play time.

Fig. 22 shows a diagram of a device type selected by the user and a location where the machine type is located in the pachinko parlor. When a field of an interesting machine type of the ranked device types shown in Fig. 21 is touched for selection, the window shown in Fig. 22 is displayed in the window of the display screen of the terminal device 2. For example, the display window shown in Fig. 22 is a field selected by touching the "festival" field ranked in Fig. 21. A pachinko machine named "festival" and a location where the machine is located in a store are displayed in the window shown in Fig. 22. A condition such as a number of a lucky machine of the day may also be displayed in a comment column displayed above a diagram showing the machine named "festival" and the location thereof.

Figs. 23 and 24 are diagrams showing display windows displayed when an operation is performed using the information supply system according to the present invention shown in Fig. 11 from the terminal device 2 over the network 1. Figs. 23 and 24 only exemplifies screen displays and display structures are not limited to those shown in the Figs.

Fig. 23 is a diagram showing a display window displayed when a hospital is selected as a category. Fig. 23 (a) shows a window displayed when a hospital is selected as a category from the top page. For example, a distance, a facility, a scale, popularity, a specialty, the number of beds, aftercare, and a wait time are displayed in the window shown as specified information in Fig. 23 (a). The user may select information by moving a pointer to specified information such as a distance or a facility and perform so called clicking. The specified information is not limited to the above-described information, but items such as a parking area and consultation hours may be added to the displayed information.

Further, according to Fig. 23 (a), the selected specified information is displayed in the right side of the window and may be weighted by the user entering a numeric value to an importance column. Any numeric value may be used for a weighting and a numeric value from 1 to 10 may be preferably selected. When the specified information is selected and an importance is entered, the display changes to a next window by clicking "Next" displayed on the bottom right of the window. Further, when a category is desired to be changed, an operation from the top page is enabled by clicking "Return to top page" displayed on the bottom of the window.

Fig. 23 (b) shows a window displayed when "Next" is clicked in the field shown in Fig. 23 (a). Types of desired treatments are displayed and a type of a medical care such as an internal medicine, a surgery or a otological preparation may be selected. Further, five options are displayed in one window in Fig. 23 (b) and a cerebral surgery, an dermatology may or another type of a medical care may be displayed or selected by selecting "Next" displayed on the bottom right

of the window. Further, when a category is changed, specified information is added or deleted, or a numeric value representing an importance is changed, an operation from the top page is enabled by clicking "Return to top page" displayed on the bottom of the window. When the display is returned to a previous page, an operation from the previous page is enabled by clicking "Return to previous page" displayed on the right to "Return to top page".

Fig. 23 (c) shows a window displayed when "1. Internal medicine" is clicked in Fig. 23 (b). A result of ranking a hospital from entry of a weighting from the selected specified information and the importance. Ranks 1 to 5 are displayed in Fig. 23 (c) and ranks are, however, not limited to 1 to 5. Further, when a category is changed, specified information is added or deleted, a numeric value representing an importance is changed or a type is changed, an operation from the top page is enabled by clicking "Return to top page". Further, an operation from a previous page is also enabled by clicking "Return to previous page".

Fig. 23 (d) shows a window displayed when the user clicks a hospital selected from ranked hospitals shown in Fig. 23 (c). A map showing a location of the hospital selected by the user and the homepage thereof may be displayed in Fig. 23 (d). Further, as shown in Fig. 23 (d), a map is displayed in the display field of the terminal device 2 and information such as consultation hours, a personal history of a doctor, a facility in the hospital or a telephone number may be collected by clicking "OO internal medicine homepage" on the top right of the window.

As for a utility to access a homepage, a homepage created by each hospital may be accessed via a network. Further, for a hospital which does not open a homepage, information such as a "telephone number", a "facsimile number" or an "address" (not shown) may be displayed with the map as shown in Fig. 23 (d). When information collection ends, next internal medicine information may be collected by clicking "Return to previous page" on the bottom of the window. When collecting all required information items ends or a category is changed, an operation from the top page is enabled by clicking "Return to top page".

Fig. 24 shows a window illustrating the embodiment in the case when a restaurant is selected as a category. Fig. 24 (a) shows a field displayed when a restaurant is selected as a category from the top page. A distance, the number of stores , await time, aprice, the number of menus , sanitary, the number of tables , the number of cars available in a parking area are displayed in the field shown in Fig. 24 (a) as specified information. The user may select information by using a mouse, a pushbutton or a scroll button to move a pointer to specified information such as a distance or a facility and click the information. Further, the specified information is not limited to the above-described items, but any information may be used if necessary.

Further, the selected specified information is displayed on the right side of the window, and the user may specify an importance by clicking the displayed specified information. In the embodiment shown in Fig. 24, important information for the user is selected from the selected specified information. With regard to weighting numeric values, weighting 1 is stored for unimportant information and weighting 2 is for an important information in the computer system 5 or the server 3 beforehand. Importance may be entered from a field separately shown instead of being stored beforehand. Further, any numeric value may be used for a weighting and a numeric value from 1 to 10 however is preferably entered. When the specified information is selected and an importance is entered, the display may proceed to display a next window by clicking "Next" displayed on the bottom right of the window. Further, when a category is changed, an operation from the top page is enabled by clicking "Return to top page" displayed on the bottom of the window.

Fig . 24 (b) shows a window display displayed when "Next" is clicked in the field shown in Fig. 24 (a). A menu item such as a Japanese dish, a western dish or a Chinese dish may be selected from types displayed in the field shown in Fig. 24 (b). Further, five options are displayed in one window shown in Fig. 24 (b) and an Indian dish, a Brazilian dish or another menu item, however, may also be displayed or selected by selecting "To next menu item" displayed on the bottom right of the window. Further, when a category is changed, specified information is added or deleted, or an importance numeric value is changed, an operation from the top page is enabled by clicking "Return to top page" displayed on the bottom of the window. When the display is returned to a previous page , an operation from the previous page is enabled by clicking "Return to previous page" displayed on the right to "Return to top page".

Fig. 24 (c) shows a window display displayed when "2. Western dish" is clicked for selection in Fig. 24 (b). A result of displaying restaurant information ranked from selected specified information and importance selection is displayed in Fig. 24 (c). Rankings up to ranking 5 are displayed in Fig. 24 (c) and ranking display is however not limited to rankings 1 to 5. Further, in Fig. 24 (c), when a category is changed, specified information is added or deleted, an importance numeric value is changed or a type is changed, an operation from the top page is enabled by clicking "Return to top page". Furthermore, an operation from a previous page is also enabled by clicking "Return to previous page".

Fig. 24 (d) shows a window display displayed when a restaurant selected by the user of restaurants ranked in Fig. 24 (c) is clicked. A map indicating a location of the restaurant selected by the user and the homepage thereof may be displayed in Fig. 24 (d). Further, as shown in Fig. 24 (d), the map showing the location of the restaurant is displayed in the display window of the terminal device 2 and information such as an opening time, a popular menu item or a today's recommendation may be collected by clicking "Western dish OO homepage" on the top right of the

window to access the homepage. A homepage of each restaurant may be accessed using a network. For a restaurant which does not open a homepage, information such as a "telephone number", an "address" and a "popular menu item" may be displayed with a map as shown in Fig. 24 (d). When information collection ends, next western dish restaurant information may be collected by clicking "Return to previous page" displayed on the bottom of the window. When collecting all required information items ends or a category is changed, an operation from a top page is enabled by clicking "Return to top page".

Fig. 25 shows a diagram of an information display window that can be used for the information supply system according to the present invention. The display window shown in Fig. 25 is a window displayed by the stocks information supply system shown in Figs. 1-10. Information ranked by the server 3 or the computer system 5 may be presented as a table, a map showing location information or a layout diagram as described above. Score differences however may also be displayed as distances from the center of the window whereon an item having the highest score, that is, a first ranking is positioned. The window display shown in Fig. 25 may be transmitted from the server 3 to the terminal device 2 over the network 1 or may be used for display without over a network.

The window display shown in Fig. 25 shows a chart indicating rankings on the left side of the window and fields for entering a weighting display by moving an input bar using a pointer means such as a mouse is positioned on the right side of the window. The user enters a desired parameter from the portion on the left side from which a weighting display is entered and receives a presentation of information ranked as desired using the process shown in Fig. 3 to 9 as the window display shown in Fig. 25. In the ranking display on the left side of Fig. 25, a stock brand having a first ranking is arranged on the center and score differences are arranged as distances from the center. Further, the circumference is arranged along a parameter having the highest score possessed by each stock brand of parameters such as a bankruptcy probability, an amount of alienation from a theoretical value, ROE, an ups and downs rate, a market share, EPS, PER and PBR.

For example, when eight values of a bankruptcy probability, an amount of alienation from a theoretical value, ROE, an ups and downs rate, a market share, EPS, PER and PBR are used as parameters, 360 degrees of the circumference is evenly divided by eight and used as axes indicating the parameters. Differences from the highest score corresponding to rankings are standardized between the center and the farthest display location and displayed as differences from the center according to score differences on the above-described axes. Fig. 26 shows a data structure used for the above-described window display. As shown in Fig. 26, an order of each stock brands, a parameter having the highest score of said stock brand and a score difference of a standard deviation weighted and averaged with a stock brand having a first ranking are correlated in data used to display the field shown in Fig. 25. When the field is displayed, a point is displayed on a distance from the center related to a score difference on a coordinate corresponding to the parameter of the stock brand having the highest score. In Fig. 25, a stock brand A having the highest score shown in Fig. 26 is shown in the center column.

Further, orders of stock brands shown in Fig. 26 are interactively linked with rankings by weightings selected by the user. When the user changes a weighting by operating the bar shown in Fig. 25, each order changes corresponding to the bar operation. Furthermore, when stock brands or commodity names are displayed according to the present invention as shown in Fig. 25, the stock brands or the commodity names may be sorted in Japanese cyllabary order, angle is determined by dividing 360 degrees by the number of stock brands or commodity names and the brands or the commodity names may also be arranged on the circumference.

Fig. 27 shows a data structure in the case when orders are changed by different weightings entered from the display shown in Fig. 25 by the user and changes of rankings corresponding to the changes of orders. As shown in Fig. 27 (a), the stock brand having the highest score by a weighting entered by the user is changed to a stock brand M and an order of the stock brand A which have had the highest score changes to order 3. These changes are made in the screen display shown in Fig. 27 (b), the stock brand M becomes the center and the stock brand A is pointed on a position on a coordinate axis apart from the center according to a score difference. Movements of the brands are indicated by arrows in Fig. 27 (b).

Further, the screen display shown in Fig. 25 may be structured to enable reference of information related to a stock brand by clicking a point corresponding to the stock brand to help a user judgment.

The above-described display window may be used to enable easy judgment for the user when ranking information without specific location information attached, and may be applied to display various types of information described according to the present invention in addition to stocks information.

The present invention has been described hereinbefore with reference to the embodiments shown in the drawings, however, the present invention is not limited to the above-described embodiments.

Further, the program for execution of the information supply method according to the present invention may be created using various languages such as the object-oriented C language for particular embodiments. The source codes of the language may be stored in a storage medium that is readable by a computer such as a floppy disk, an optical disk, an opto-magnetic disk, a hard disk or a CD-ROM. The above-described source codes may be provided as transmissible transmission media provided over a network.

Industrial Applicability of the Invention

As described above, an information supply system, an information supply method and a storage medium wherein a program for execution of said information supply means may be provided to allow an individual trying to purchase a commodity to collect information individually customized according to individual conditions in consideration of various factors corresponding to each information item by enabling reduction of a time required for comparative study of a brand such as a stock and selective judgment of insurance, an automobile, electric apparatus, a hospital, a school or a like such as perfume, a food or a cosmetic according to the present invention.

## Claims

**1.** An information supply system comprising;

a server connected to a network,
a terminal device which requests for information over said network,

wherein said server transmits to said terminal device information ranked using numeric values of specified information and a weighting entered from said terminal device according to a request from said terminal device.

**2.** The information supply system according to Claim 1, wherein said information supply system comprises a database and said database stores said numeric specified information.

**3.** The information supply system according to Claim 1 or 2, wherein said server presents raked information to said terminal device, interactively changes said ranked specified information in relation with a request from said terminal device and presents thereof to said terminal device.

**4.** The information supply system according to any one of Claims 1 to 3, wherein said specified information is investment information including a theoretical value, an ups and downs rate, ROE, EPS, PER and PBR used to judge a bankruptcy probability and appropriateness of a stock price.

**5.** The information supply system according to Claim 4 comprising:

means for providing numeral values of said bankruptcy probability, said theoretical value, said ups and downs rate , said ROE, said EPS, said PER and said PBR respectively, and
means for ranking said investment information using said numeral values of said specified information and said weighting.

**6.** The information supply system according to Claim 5, wherein said means for providing said numeric values calculates a standard deviation of said specified information.

**7.** The information supply system according to Claim 6, wherein said means for ranking ranks said information by weighted mean values using a standard deviation obtained in relation with said specified information and said weighting.

**8.** The information supply system according to any one of Claims 5 to 7, wherein said means for providing numeric values calculates a deviation value obtained from said standard deviation.

**9.** An information supply method using a server connected to a network and a terminal device which requests said server for information over said network; said method comprising the steps of:

receiving a request for information in said server from said terminal device;
receiving a weighting in said server from said terminal device;
providing a numeral value of specified information in said server;
ranking said information using said numeral value of said specified information and said weighting; and
transmitting said ranked information from said server to said terminal device.

**10.** The information supply method according to Claim 9, wherein said specified information is investment information

including a theoretical value, an ups and downs rate, ROE, EPS, PER and PBR used to judge a bankruptcy probability and appropriateness of a stock price.

**11.** The information supply method according to Claim 9 or 10, wherein said step for providing numeral values calculates a standard deviation of said specified information.

**12.** The information supply method according to any one of Claims 9 to 11, wherein said step for ranking ranks information from a weighted mean values using a standard deviation obtained in relation with said specified information and said weighting.

**13.** The information supply method according to any one of Claims 9 to 12, wherein said step for providing numeral values calculates a deviation value obtained from said standard deviation.

**14.** A computer readable storage medium for executing a program for an information supply method using a server connected to a network and a terminal device which requests said server for information over said network; said program executing the steps of:

receiving a request for information in said server from said terminal device;
receiving a weighting in said server from said terminal device;
providing a numeral value of specified information in said server;
ranking said information using said numeral value of said specified information and said weighting; and
transmitting said ranked information from said server to said terminal device.

**15.** The storage medium according to Claim 14, wherein said specified information is investment information including a theoretical value, an ups and downs rate, ROE, EPS, PER and PBR used to judge a bankruptcy probability and appropriateness of a stock price.

**16.** The storage medium according to Claim 14 or 15, wherein said step for providing numeral values calculates a standard deviation of said specified information.

**17.** The storage medium according to any one of Claims 14 to 16, wherein said step for ranking ranks information from a weighted mean values using a standard deviation obtained in relation with said specified information and said weighting.

**18.** An information supply system comprising:

a server connected to a network and
a terminal device which requests said server for information over a network,

wherein said server stores location information related to said information, and provides numeral values of specified information according to a request from said terminal device, and

wherein said server provides to said terminal device information ranked using said digitized specified information together with location information associated with said information.

**19.** The information supply system according to Claim 18, wherein said numeral value is a standard deviation of said specified information.

**20.** The information supply system according to Claim 18 or 19, wherein said ranking ranks information from a weighted mean values using a standard deviation obtained in relation with said specified information and said weighting.

**21.** The information supply system according to Claim 19 or 20, wherein said numeral value includes a deviation value obtained from said standard deviation.

**22.** An information supply system comprising;

a terminal device which requests for information,
a storage medium storing information and location information related to said information, and
a computer system which ranks information using numeral values of said specified information and weighting

entered from said terminal device,

wherein said information supply system transmits said ranked information and location information related to said information to said terminal device.

**23.** The information supply system according to Claim 22, wherein said numeral value include a standard deviation of said specified information.

**24.** The information supply system according to Claim 23, wherein said computer system ranks information from a weighted mean values using standard deviations obtained in relation with said specified information and said weighting.

**25.** The information supply system according to Claim 23 or 24, wherein said numeral value includes a deviation value obtained from said standard deviation.

**26.** An information supply method in an information supply system comprising a server connected to a network and a terminal device which requests said server for information over a network, said method comprises the steps of:

receiving said server a request for information from said terminal device,
receiving said server a weighting from said terminal device,
providing numeric values of said specified information is digitized,
ranking information using said numeric values of said specified information and said weighting, and
transmitting said ranked information and location information related to said information from said server to said terminal device.

**27.** The information supply method according to Claim 26, wherein said step for providing said numeric values comprises the step for calculating a standard deviation of said specified information.

**28.** The information supply method according to Claim 27, wherein said step for ranking comprises the step of ranking information from a weighted mean using a standard deviation obtained in relation with said specified information and said weighting.

**29.** The information supply method according to Claim 27 or 28, wherein said step for providing said numeral values comprises the step of calculating a deviation value obtained from said standard deviation.

**30.** An information supply system comprising a server connected to a network and a terminal device which requests said server for information over said network, wherein said server transmits ranked information numeric vales of specified information and a weighting entered from said terminal device to said terminal device according to a request from said terminal device, said information supply system comprising;

means for displaying information having the highest score of said ranked information and other information on a display window of said terminal device, said displayed information being arranged to be centered by said information having the highest score,
means for displaying a difference between scores of said information having the highest score and other information on a display screen of said terminal device as a distance from the center, and
means for displaying information while changing a distance from information located on the center in relation with a change of said weighting transmitted from said terminal device and a distance from said center.

**31.** An information supply method in an information supply system comprising a server connected to a network and a terminal device which requests said server for information over said network, said server ranked information using numeric values of said specified information and a weighting entered from said terminal device to said terminal device according to a request from said terminal device, said method comprising:

displaying information having the highest score of said ranked information and other information on a display screen of said terminal device centered by said information having the highest score,
displaying a difference between scores of said information having the highest score and other information on a display screen of said terminal device as a distance from the center, and
displaying information while changing a distance from information located on the center in relation with a

change of said weighting transmitted from said terminal device and a distance from said center.

**32.** A computer readable storage medium storing a computer readable program which executes an information supply method in an information supply system comprising a server connected to a network and a terminal device which requests said server for information over said network, said program executing the steps of:

displaying information having the highest score of said ranked information and other information on a display screen of said terminal device centered by said information having the highest score,
displaying a difference between scores of said information having the highest score and other information on a display screen of said terminal device as a distance from the center, and
displaying information while changing a distance from information located on the center in relation with a change of said weighting transmitted from said terminal device and a distance from said center.

Fig. 1

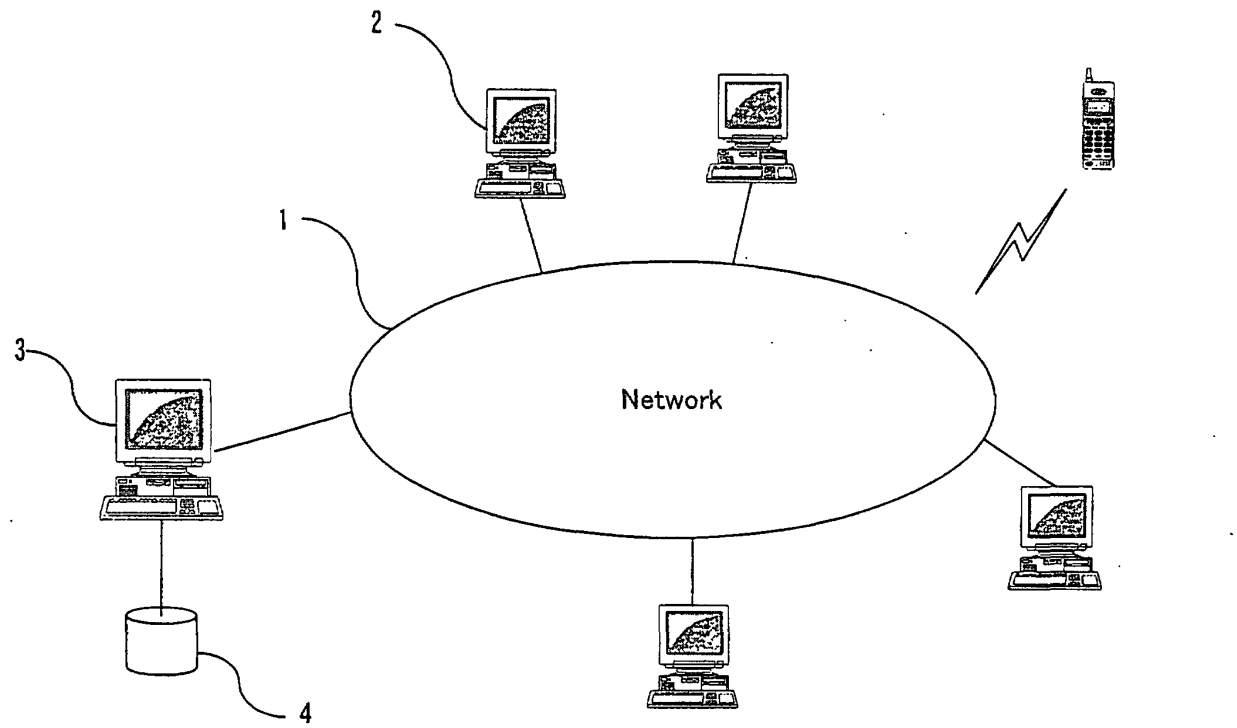

Fig. 2

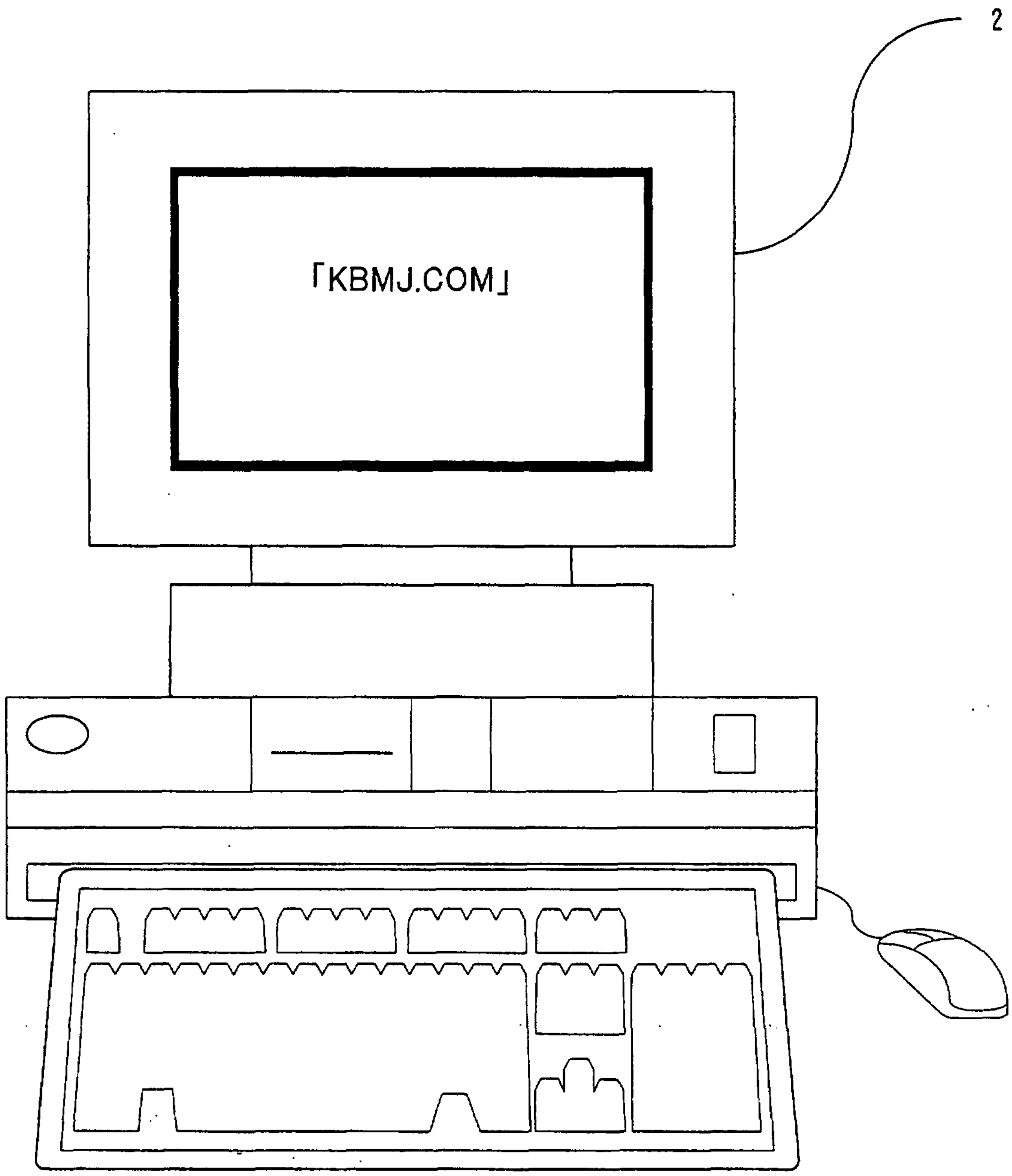

Fig. 3

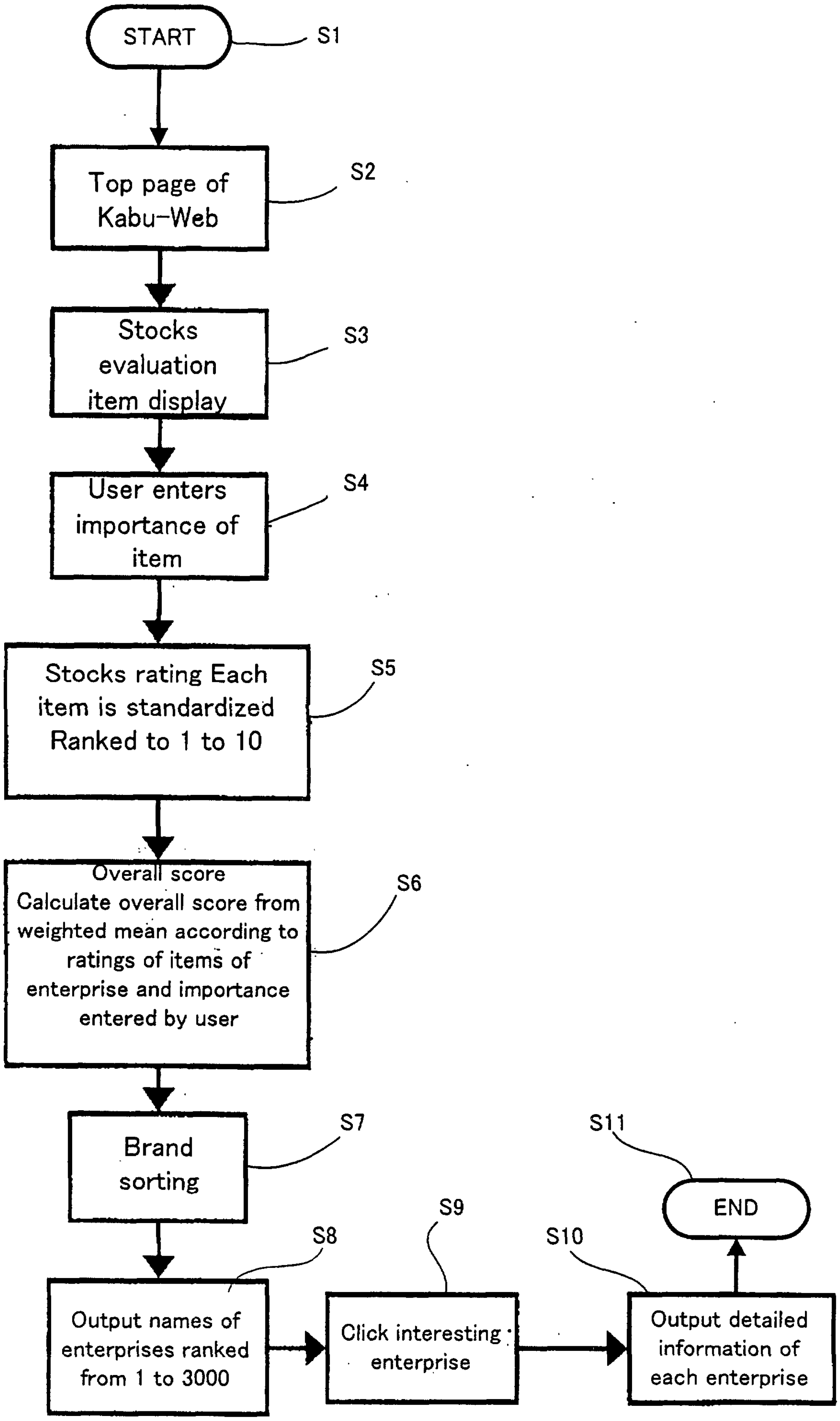
START
S1
Top page of Kabu-Web
S2
Stocks evaluation item display
S3
User enters importance of item
S4
Stocks rating Each item is standardized Ranked to 1 to 10
S5
Overall score Calculate overall score from weighted mean according to ratings of items of enterprise and importance entered by user
S6
Brand sorting
S7
Output names of enterprises ranked from 1 to 3000
S8
Click interesting enterprise
S9
Output detailed information of each enterprise
S10
END
S11

Fig. 4

| Stock brand | Market | Enterprise data | financial data | Stock price data |
|---|---|---|---|---|
| OX store Corp. | Tokyo Stock Market $1^{st}$ Section | XXXX | aaaaa | bbbbb |
| East ▲ Tanga Corp. | Tokyo Stock Market $2^{nd}$ Section | ▪▪▪ | ▪▪▪ | ▪▪▪ |
| Nichi▲▲◎ Corp. | Tokyo Stock Market $1^{st}$ Section | | | |
| ◎ Synthesis Corp. | Tokyo Stock Market $1^{st}$ Section | | | |
| ◆◆ Industry Corp. | Tokyo Stock Market $2^{nd}$ Section | | | |
| Oh◎ T Industry Corp. | Tokyo Stock Market $1^{st}$ Section | | | |
| ◎tomo◎○tal Corp. | Tokyo Stock Market $2^{nd}$ Section | | | |
| To○◆◆ Corp. | Tokyo Stock Market $1^{st}$ Section | | | |
| ◆◆▲◆ Corp. | Tokyo Stock Market $1^{st}$ Section | | | |
| | | | | |

Fig. 5

| Stock brand | Bankruptcy probability | Appropriateness value | Ups and downs rate | ROE | EPS | PER | PBR | Deviation value |
|---|---|---|---|---|---|---|---|---|
| OX store Corp. | ttttt | xxxx | mmm | nnnn | .oooo | ・・・ | ・・・ | 63 |
| East ▲ Tanga Corp. | ・・・ | ・・・ | ・・・ | ・・・ | ・・・ | | | 52 |
| Nichi▲▲◎ Corp. | | | | | | | | 58 |
| ◎ Synthesis Corp. | | | | | | | | |
| ◆◆ Industry Corp. | | | | | | | | |
| Oh◎ T Industry Corp. | | | | | | | | |
| ◎tomo◎○tal Corp. | | | | | | | | |
| To○◆◆ Corp. | | | | | | | | |
| ◆◆▲◆ Corp. | | | | | | | | |
| | | | | | | | | |
| | | | | | | | | |
| | | | | | | | | |

Fig. 6

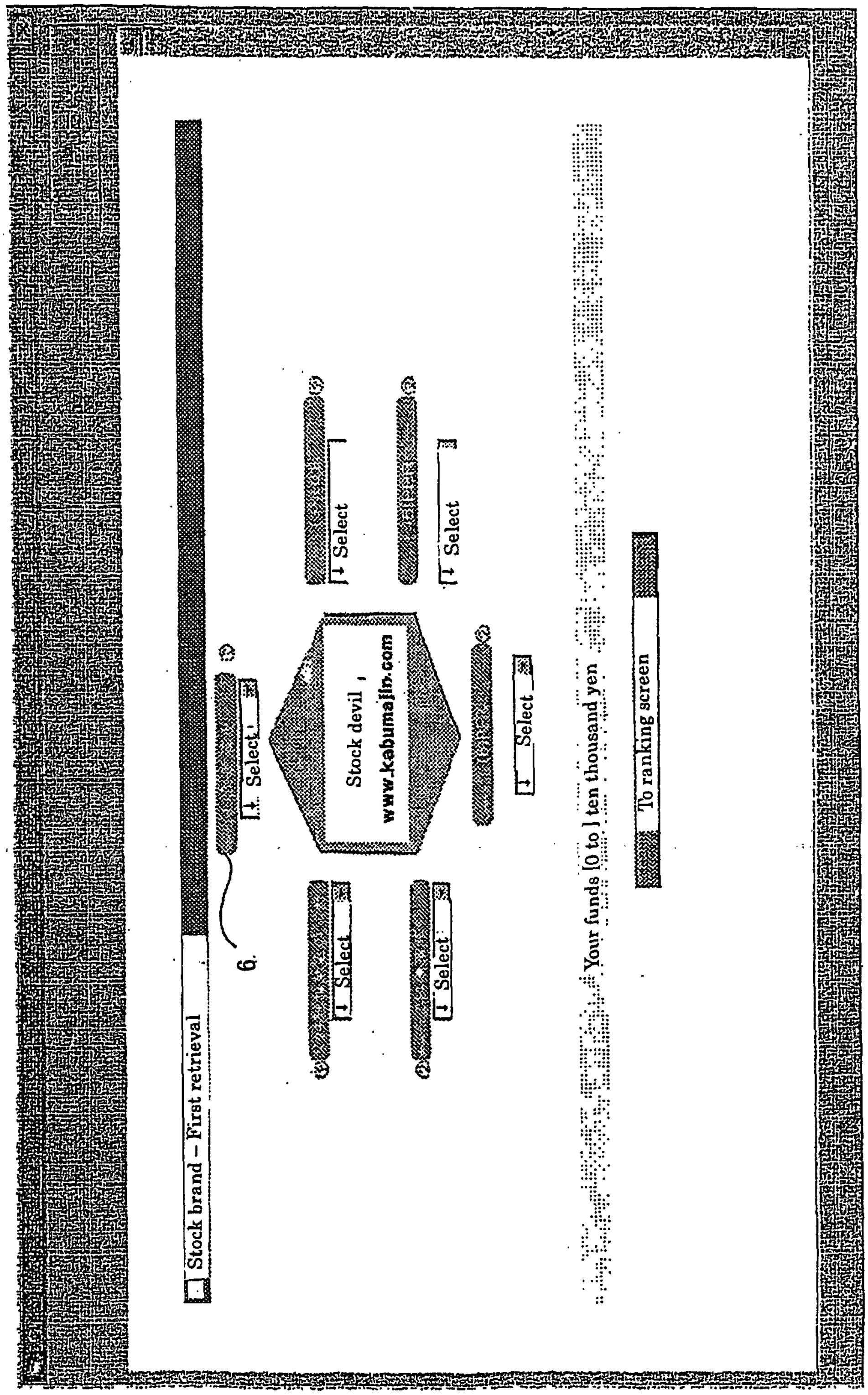
Stock brand – First retrieval
6
Select
Select
Select
Select
Select
Select
Stock devil ,
www.kabumajin.com
Your funds [0 to ] ten thousand yen
To ranking screen

Fig. 7

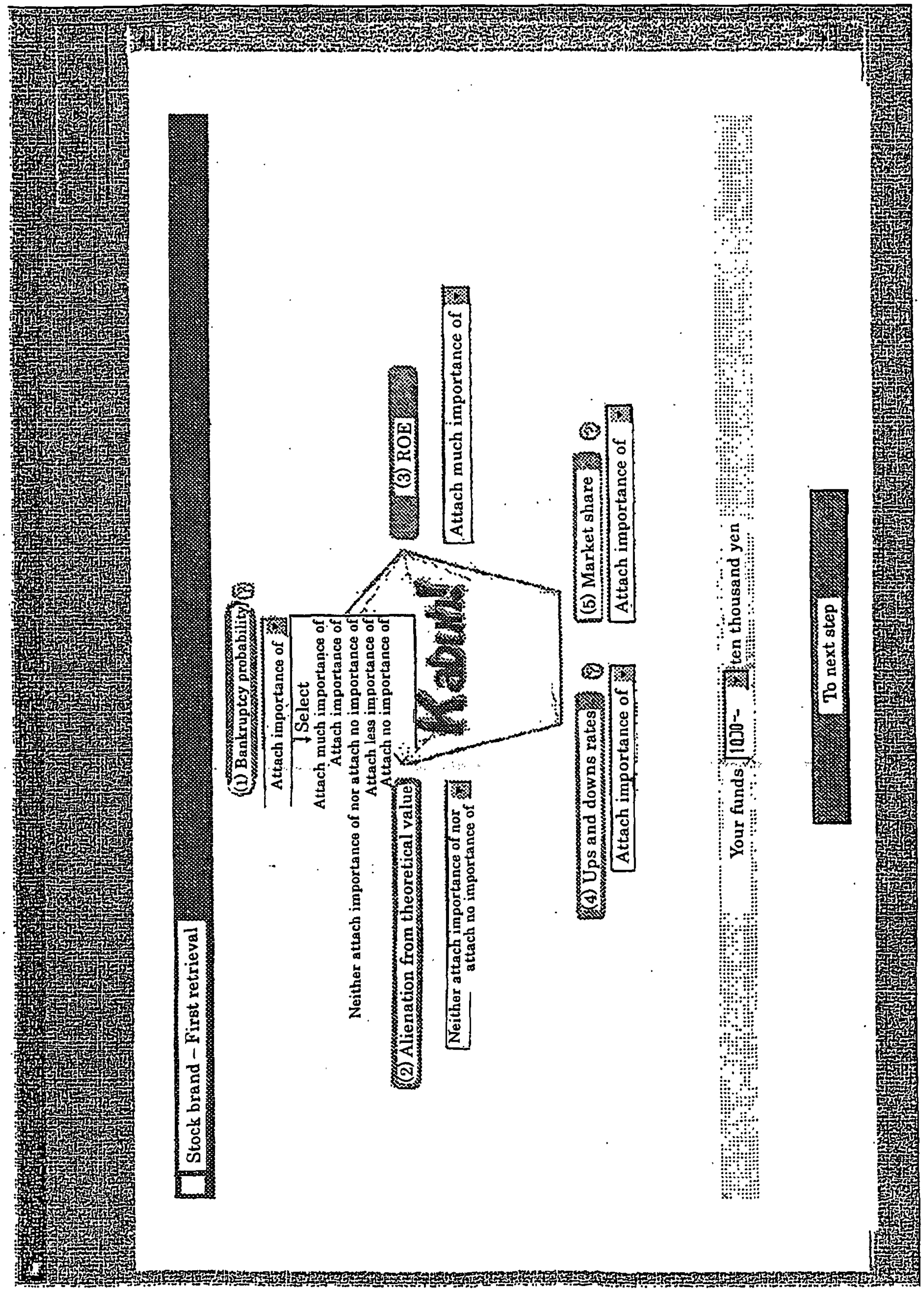
Stock brand – First retrieval
(1) Bankruptcy probability
Attach importance of
↓Select
Attach much importance of
Attach importance of
Neither attach importance of nor attach no importance of
Attach less importance of
Attach no importance of
(2) Alienation from theoretical value
Neither attach importance of nor attach no importance of
(3) ROE
Attach much importance of
Kabu!!
(4) Ups and downs rates
Attach importance of
(5) Market share
Attach importance of
Your funds 1000~ ten thousand yen
To next step

Fig. 8

| Weighting expression | Weighting coefficient |
|---|---|
| Attach much importance of | 5 |
| Attach importance of | 4 |
| Neither attach importance of nor attach no importance of | 3 |
| Attach less importance of | 2 |
| Attach no importance of | 0 |

Stock brand – First retrieval result

7

Retrieval result of ○●

| Total order | (Score) | Code | Market | Name | Related information |
|---|---|---|---|---|---|
| 1st | 120.41 | AAAA | Tokyo Stock Market 1st Section | OX store Corp. | Enterprise IR information chart [1 year] |
| 2nd | 51.06 | BBBB | Tokyo Stock Market 2nd Section | East ▲ Tanga Corp. | Enterprise IR information chart [1 year] |
| 3rd | 38.21 | CCCC | Tokyo Stock Market 1st Section | Nichi▲▲ Motor ◎ Corp. | Enterprise IR information chart [1 year] |
| 4th | 37.93 | DDDD | Osaka Stock Market 1st Section | I■■◎ Corp. | Enterprise IR information chart [1 year] |
| 5th | 31.87 | FFFF | Tokyo Stock Market 1st Section | ■◎ Synthesis Corp. | Enterprise IR information chart [1 year] |
| 6th | 30.35 | GGGG | Tokyo Stock Market 2nd Section | Ina■ Industry Corp. | Enterprise IR information chart [1 year] |
| 7th | 30.10 | HHHH | Tokyo Stock Market 1st Section | Dai◎■ Industry Corp. | Enterprise IR information chart [1 year] |
| 8th | 26.36 | KKKK | Osaka Stock Market 2nd Section | ◎tomo◎zoku■yama Corp. | Enterprise IR information chart [1 year] |
| 9th | 26.28 | UUUU | Tokyo Stock Market 1st Section | ToO■■ Corp. | Enterprise IR information chart [1 year] |
| 10th | 25.00 | EEEE | Tokyo Stock Market 1st Section | ■■▲◆ Corp. | Enterprise IR information chart [1 year] |

Copyright (C) 2000 Kabumajin Corporation. All Rights Reserved.

- Transcription or selling of the stock price information is strictly prohibited.
- The contents of the provided stock price information are created very carefully, but the contents are not guaranteed. The company and the provider of the stock price information are not responsible for any damage caused by this information.
- When stock division or other event takes place, the chart is retroactively corrected.
- A correction such as ex rights is not applied to a points from a day before.

Fig. 10

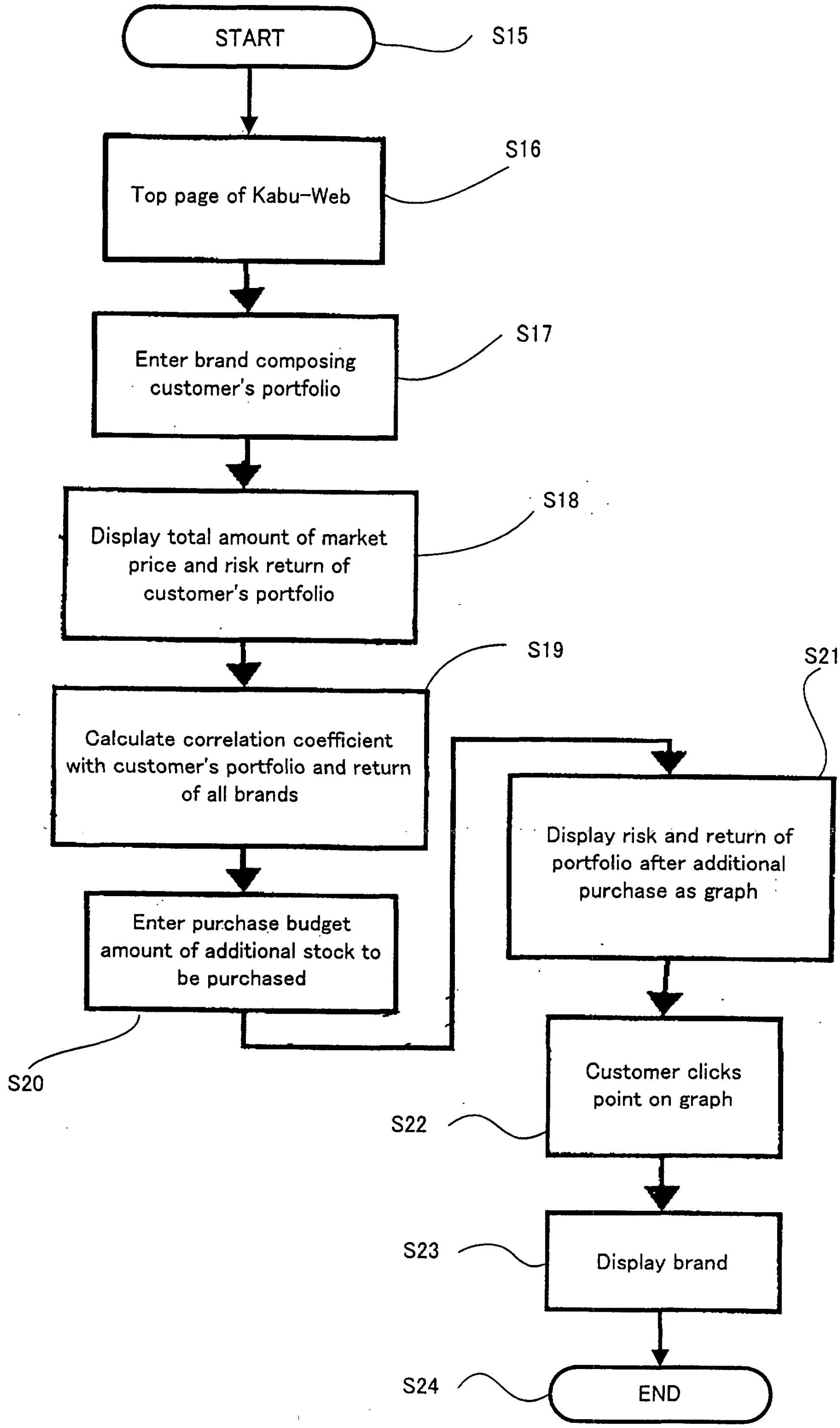
START
S15
Top page of Kabu-Web
S16
Enter brand composing customer's portfolio
S17
Display total amount of market price and risk return of customer's portfolio
S18
Calculate correlation coefficient with customer's portfolio and return of all brands
S19
Enter purchase budget amount of additional stock to be purchased
S20
Display risk and return of portfolio after additional purchase as graph
S21
Customer clicks point on graph
S22
Display brand
S23
END
S24

Fig. 11

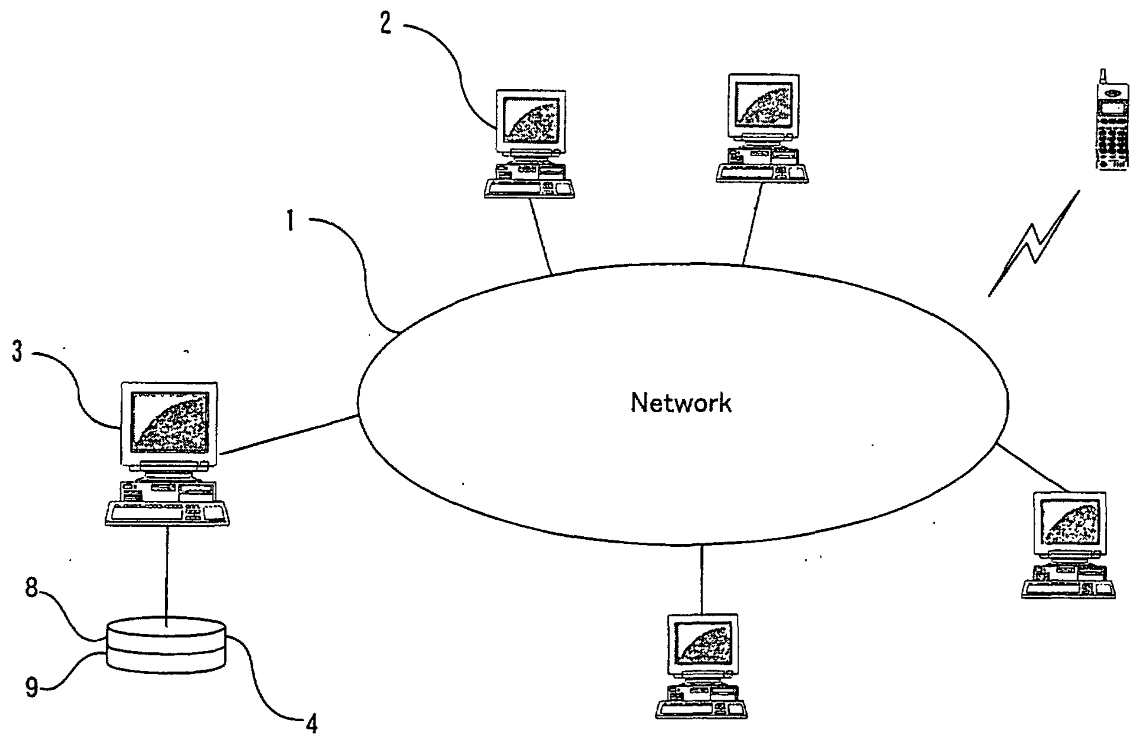

Fig. 12

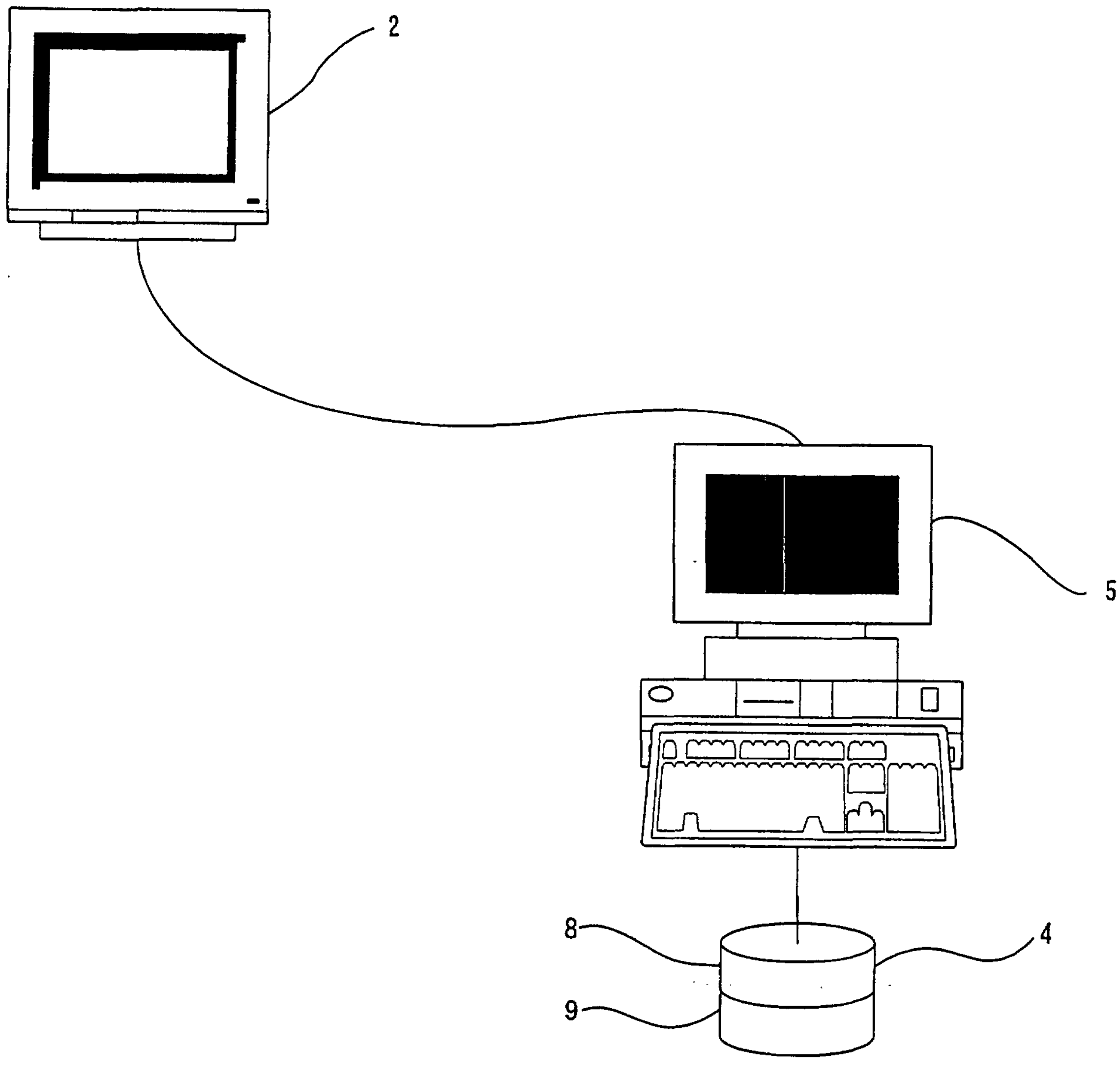

Fig. 13

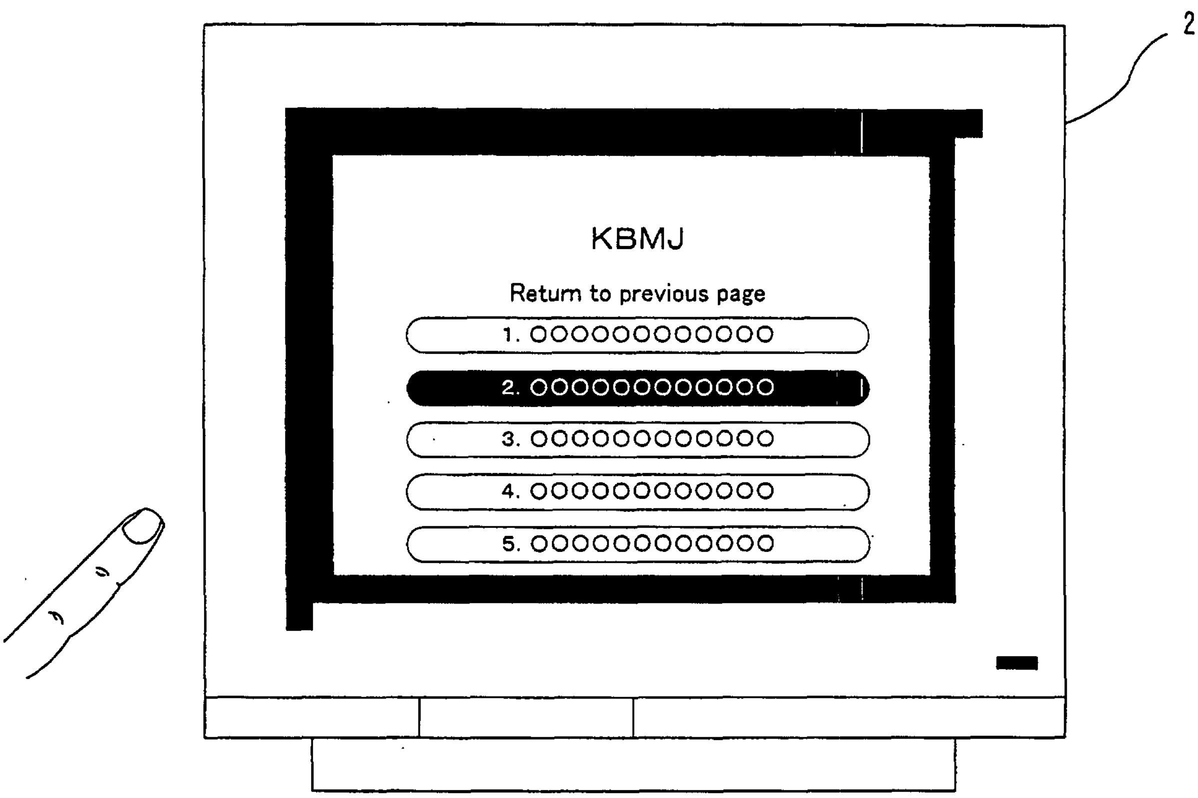
2
KBMJ
Return to previous page
1. OOOOOOOOOOOO
2. OOOOOOOOOOOO
3. OOOOOOOOOOOO
4. OOOOOOOOOOOO
5. OOOOOOOOOOOO

Fig. 14

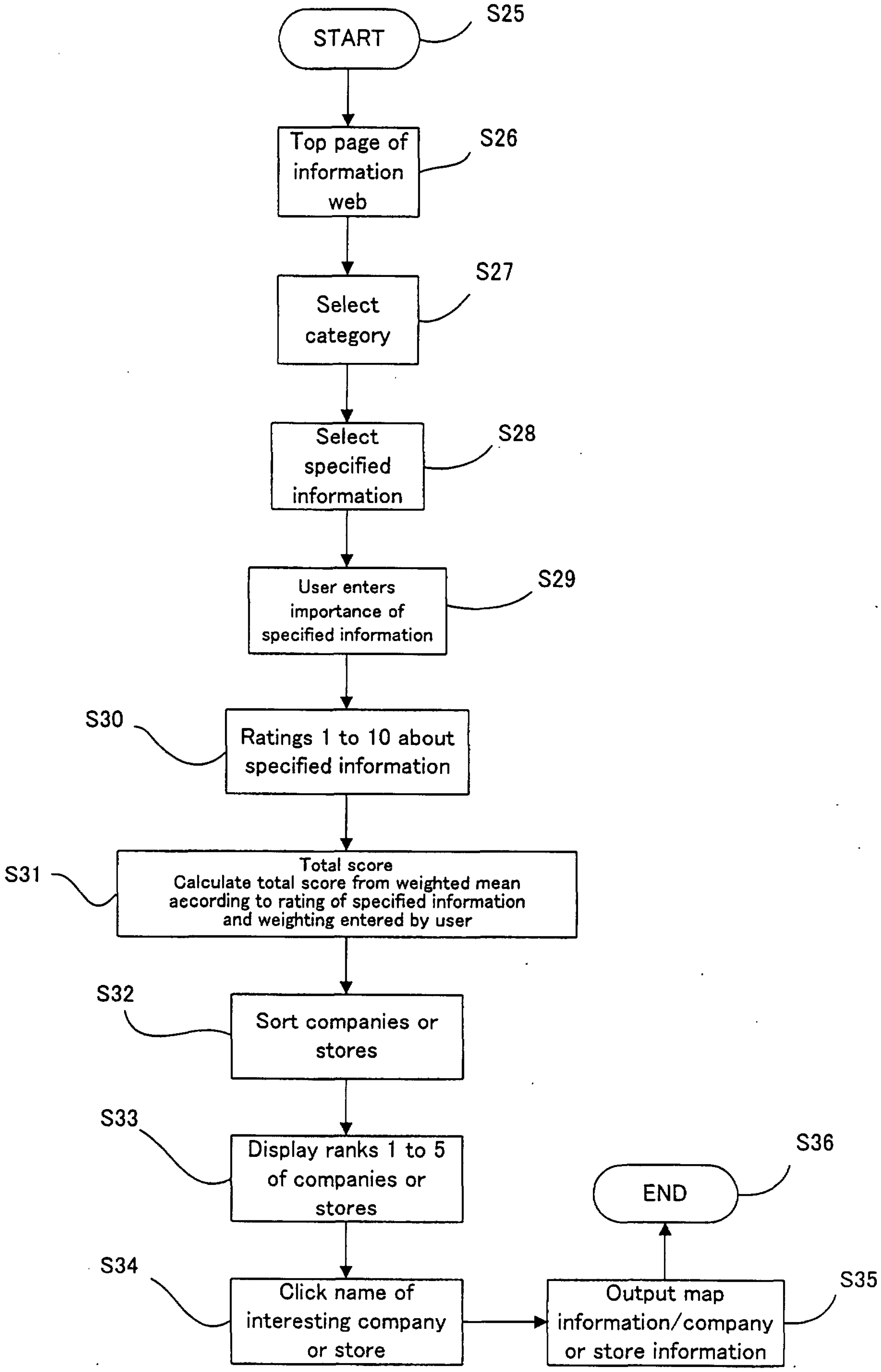
START
S25
Top page of information web
S26
Select category
S27
Select specified information
S28
User enters importance of specified information
S29
S30
Ratings 1 to 10 about specified information
S31
Total score
Calculate total score from weighted mean according to rating of specified information and weighting entered by user
S32
Sort companies or stores
S33
Display ranks 1 to 5 of companies or stores
S34
Click name of interesting company or store
Output map information/company or store information
S35
END
S36

Fig. 15

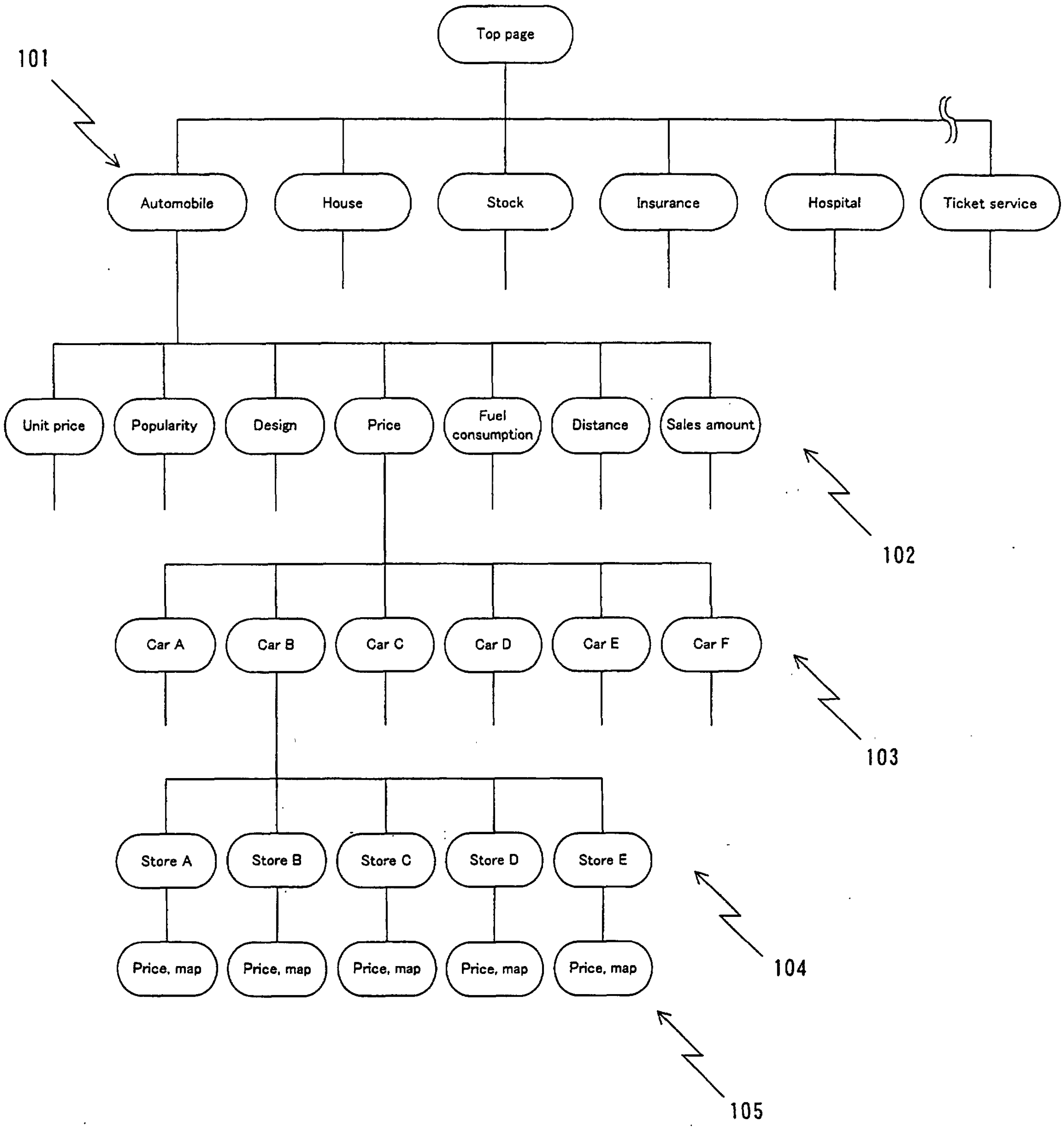
Top page
101
Automobile
House
Stock
Insurance
Hospital
Ticket service
Unit price
Popularity
Design
Price
Fuel consumption
Distance
Sales amount
102
Car A
Car B
Car C
Car D
Car E
Car F
103
Store A
Store B
Store C
Store D
Store E
104
Price, map
Price, map
Price, map
Price, map
Price, map
105

Fig. 16

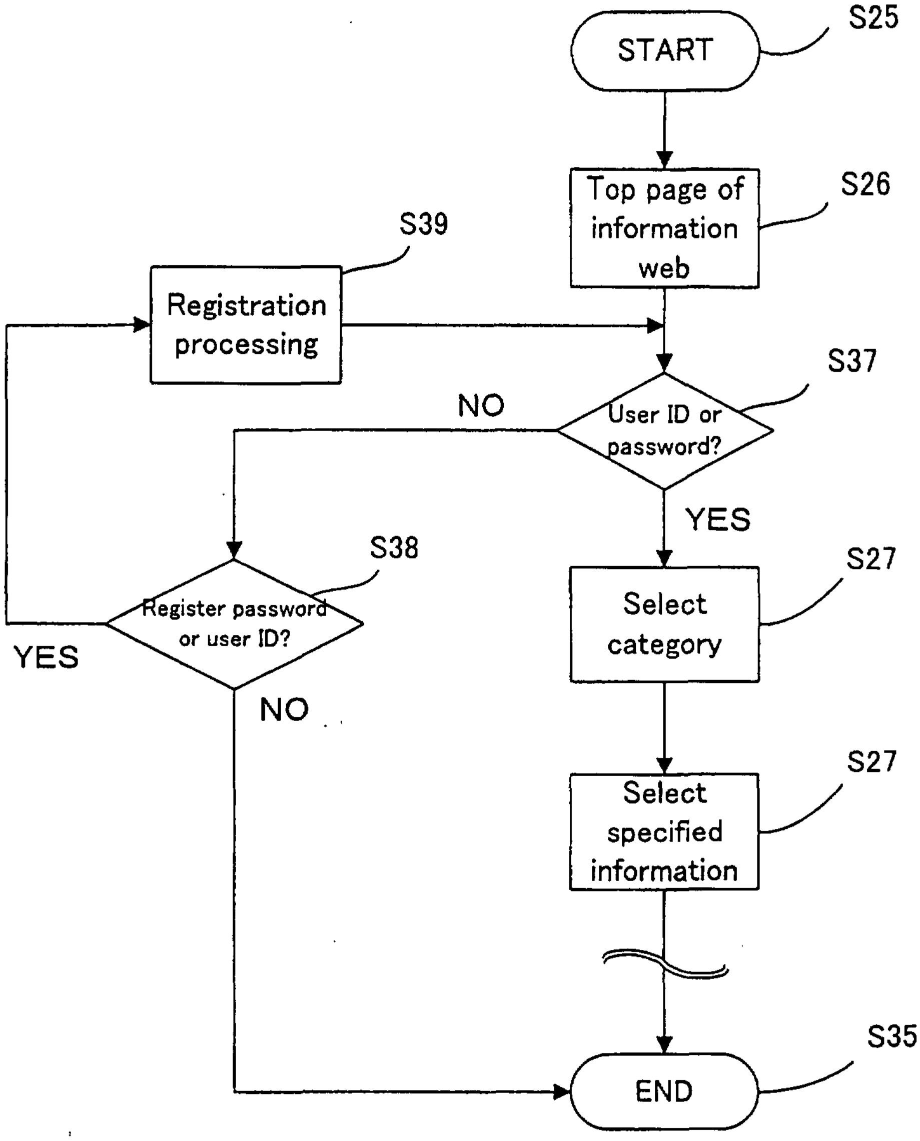
START
S25
Top page of information web
S26
S39
Registration processing
S37
NO
User ID or password?
YES
S38
Register password or user ID?
YES
NO
S27
Select category
S27
Select specified information
S35
END

Fig. 17

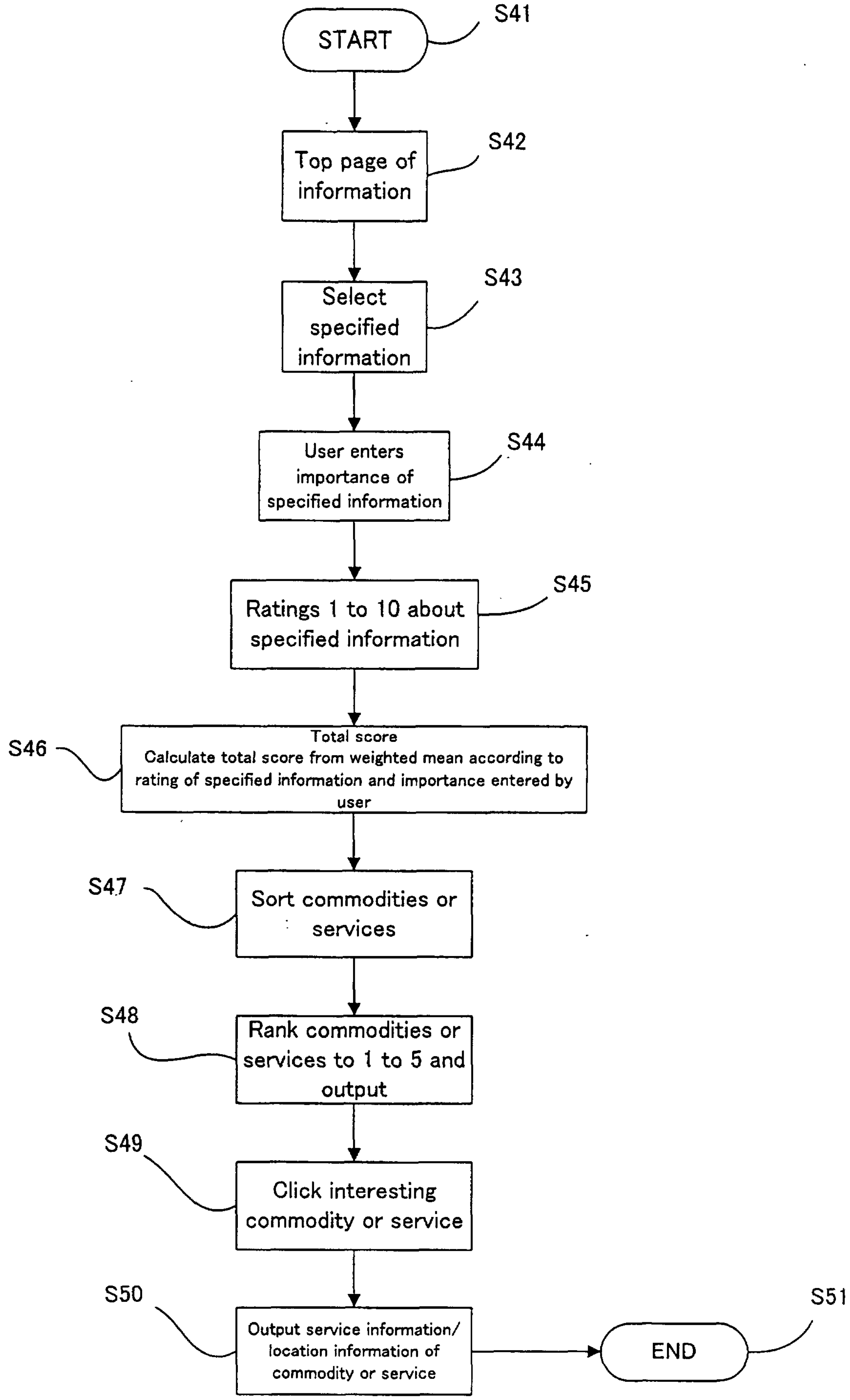
START
S41
Top page of information
S42
Select specified information
S43
User enters importance of specified information
S44
Ratings 1 to 10 about specified information
S45
Total score
Calculate total score from weighted mean according to rating of specified information and importance entered by user
S46
Sort commodities or services
S47
Rank commodities or services to 1 to 5 and output
S48
Click interesting commodity or service
S49
Output service information/ location information of commodity or service
S50
END
S51

Fig. 18

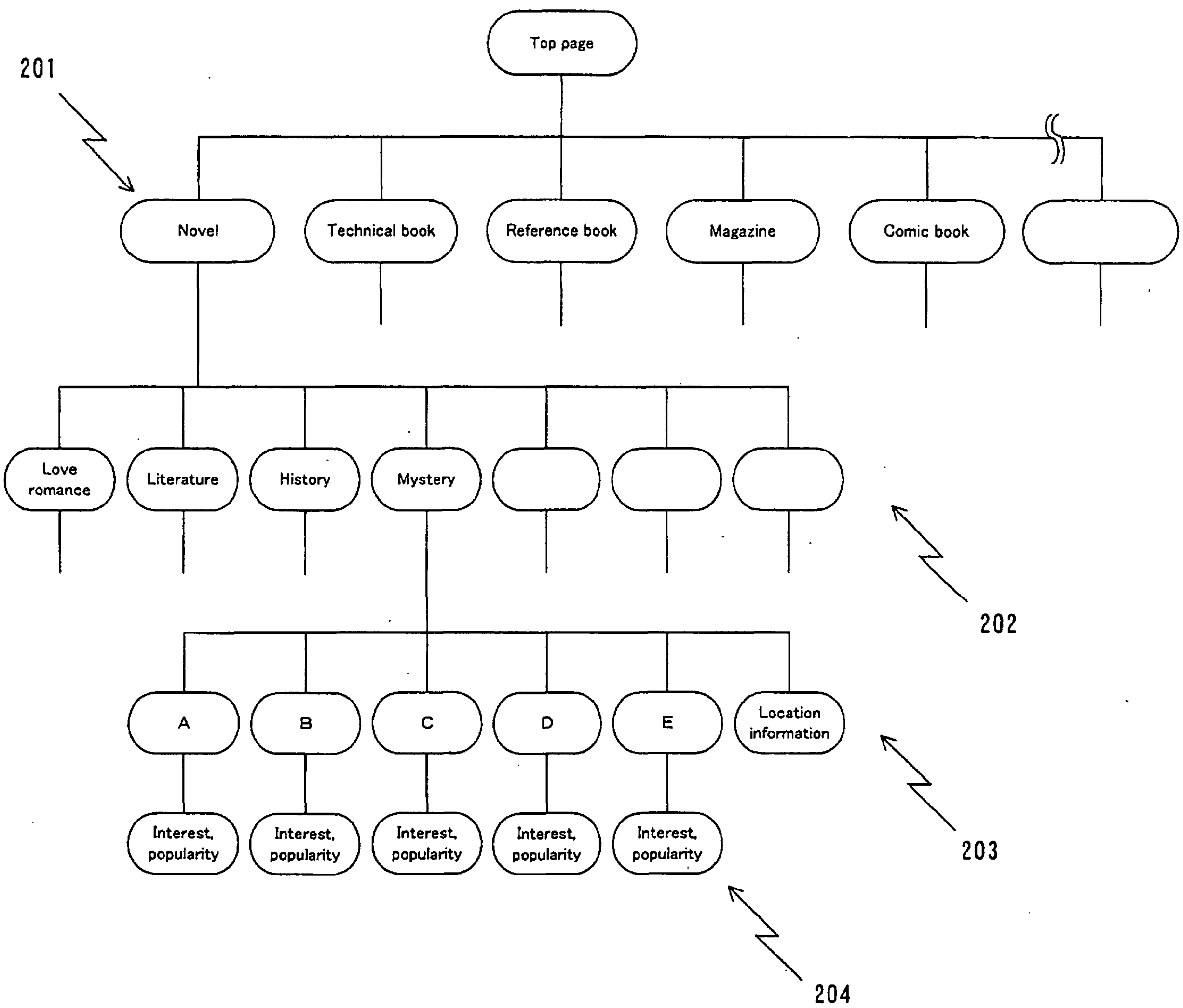

201
Top page
Novel
Technical book
Reference book
Magazine
Comic book
Love romance
Literature
History
Mystery
202
A
B
C
D
E
Location information
203
Interest, popularity
Interest, popularity
Interest, popularity
Interest, popularity
Interest, popularity
204

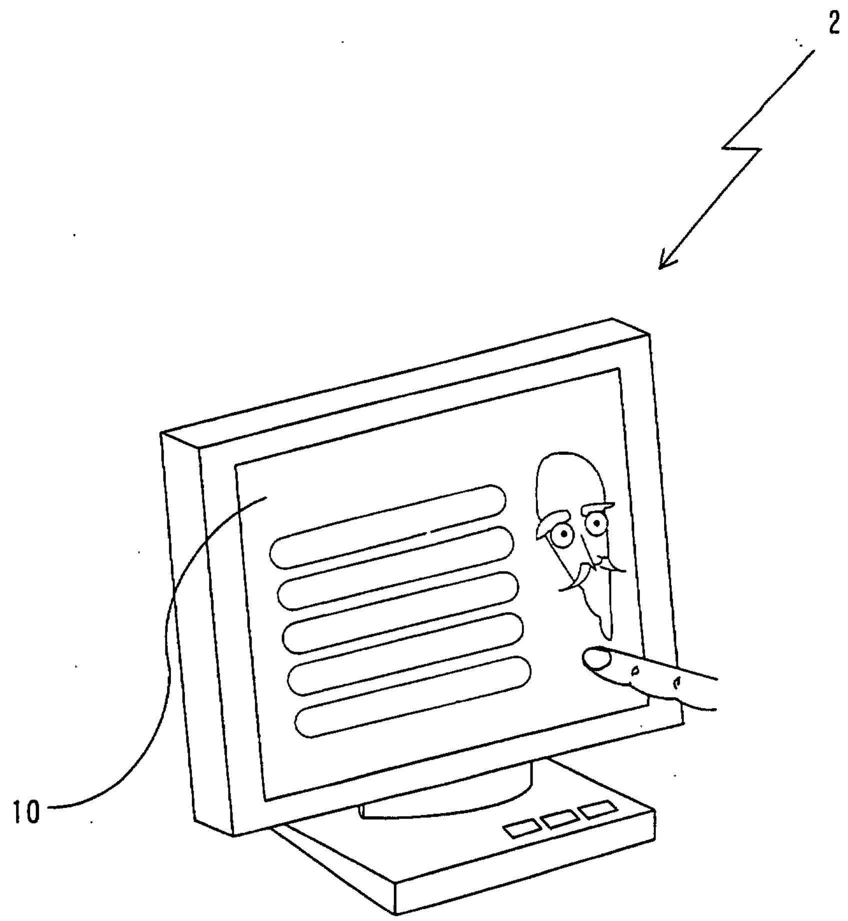


Fig. 19

Fig. 20

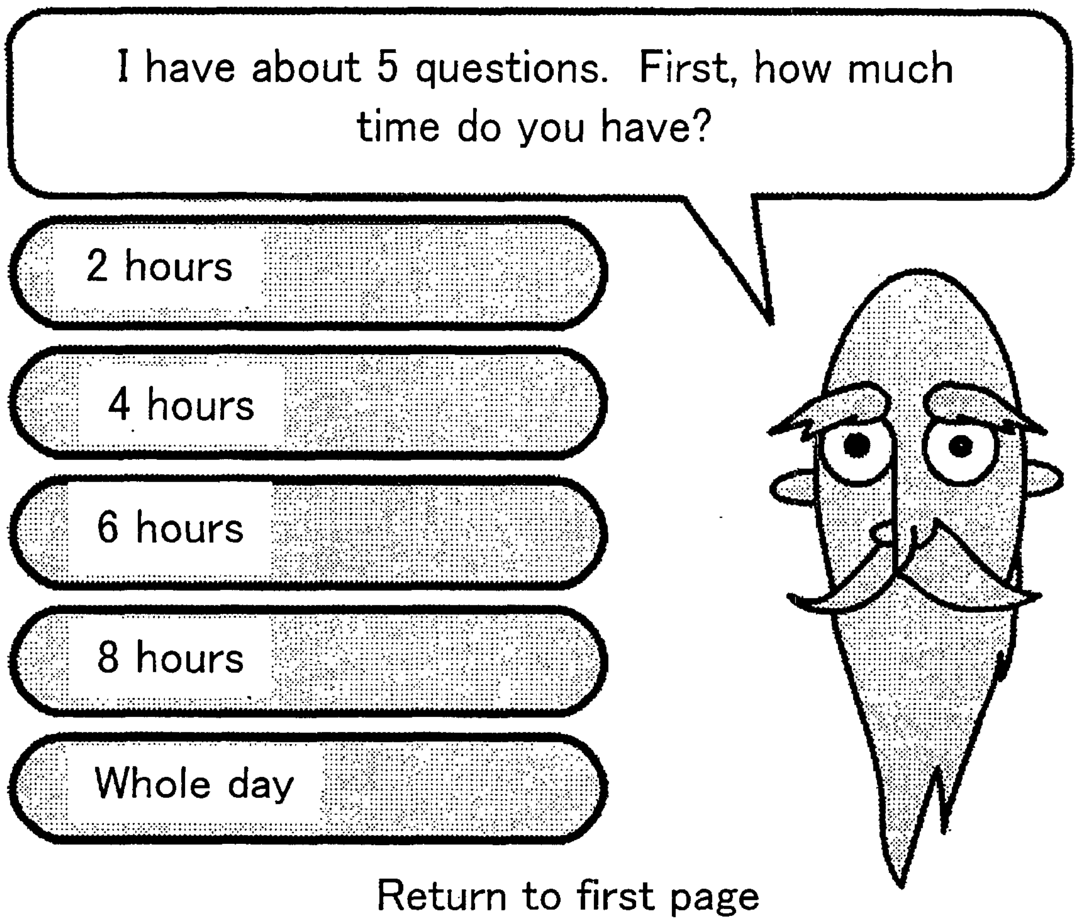
I have about 5 questions. First, how much time do you have?
2 hours
4 hours
6 hours
8 hours
Whole day
Return to first page

Fig. 21

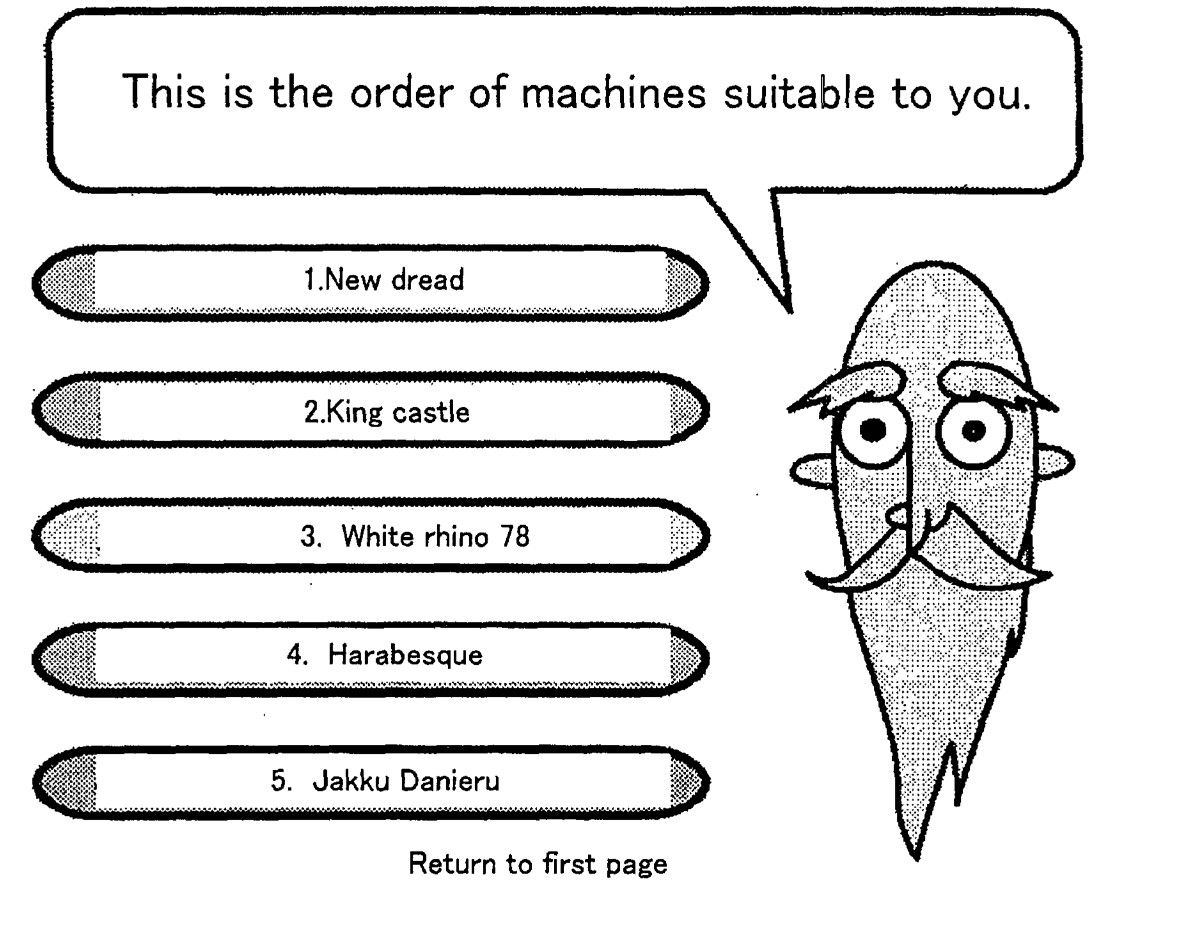
This is the order of machines suitable to you.
1.New dread
2.King castle
3. White rhino 78
4. Harabesque
5. Jakku Danieru
Return to first page

Fig. 22

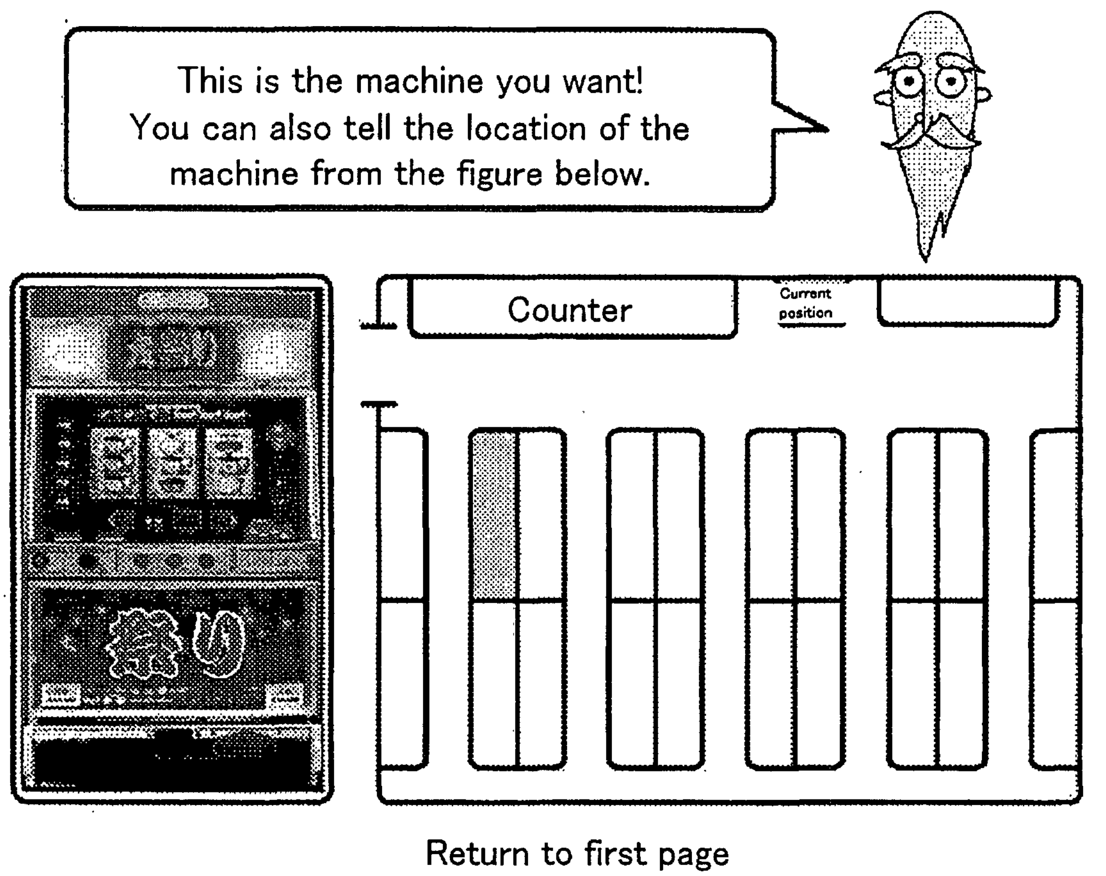
This is the machine you want!
You can also tell the location of the
machine from the figure below.
Counter
Current position
Return to first page

Fig. 23

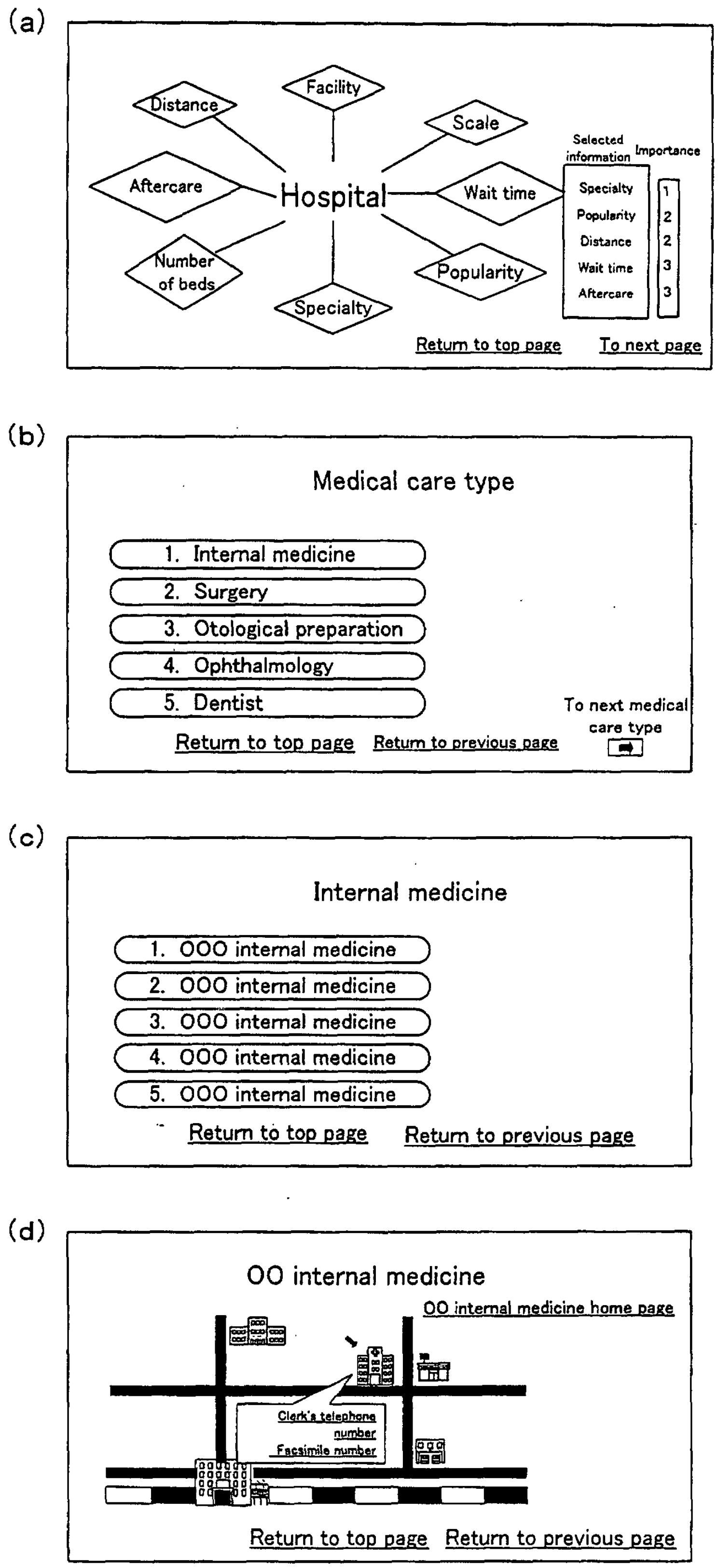
(a)
Facility
Distance
Scale
Aftercare
Hospital
Wait time
Number of beds
Popularity
Specialty
Selected information
Importance
Specialty 1
Popularity 2
Distance 2
Wait time 3
Aftercare 3
Return to top page
To next page
(b)
Medical care type
1. Internal medicine
2. Surgery
3. Otological preparation
4. Ophthalmology
5. Dentist
To next medical care type
Return to top page
Return to previous page
(c)
Internal medicine
1. OOO internal medicine
2. OOO internal medicine
3. OOO internal medicine
4. OOO internal medicine
5. OOO internal medicine
Return to top page
Return to previous page
(d)
OO internal medicine
OO internal medicine home page
Clerk's telephone number
Facsimile number
Return to top page
Return to previous page

Fig. 24

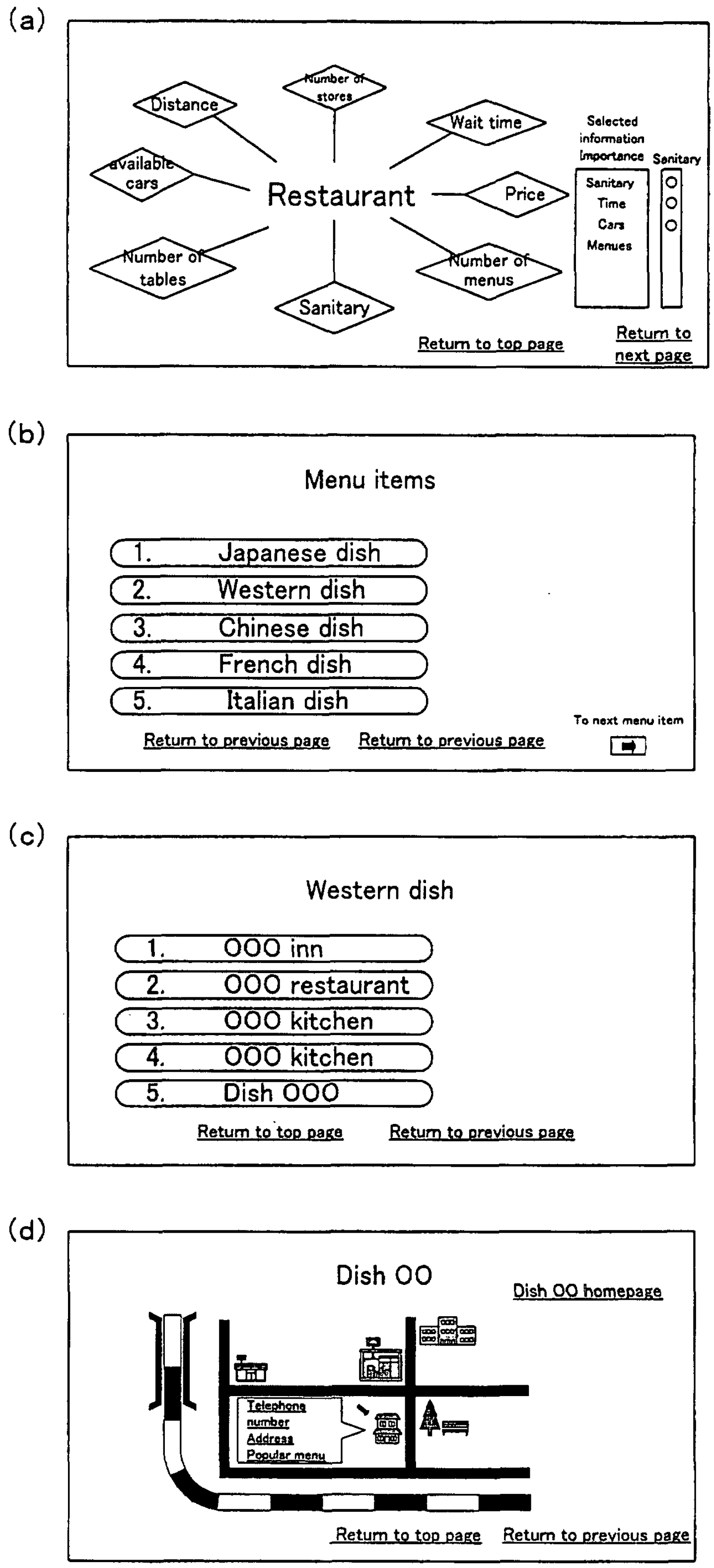
(a)
Distance
Number of stores
Wait time
available cars
Restaurant
Price
Number of tables
Sanitary
Number of menus
Selected information Importance
Sanitary
Sanitary
Time
Cars
Menues
Return to top page
Return to next page
(b)
Menu items
1. Japanese dish
2. Western dish
3. Chinese dish
4. French dish
5. Italian dish
Return to previous page
Return to previous page
To next menu item
(c)
Western dish
1. OOO inn
2. OOO restaurant
3. OOO kitchen
4. OOO kitchen
5. Dish OOO
Return to top page
Return to previous page
(d)
Dish OO
Dish OO homepage
Telephone number
Address
Popular menu
Return to top page
Return to previous page

Fig. 25

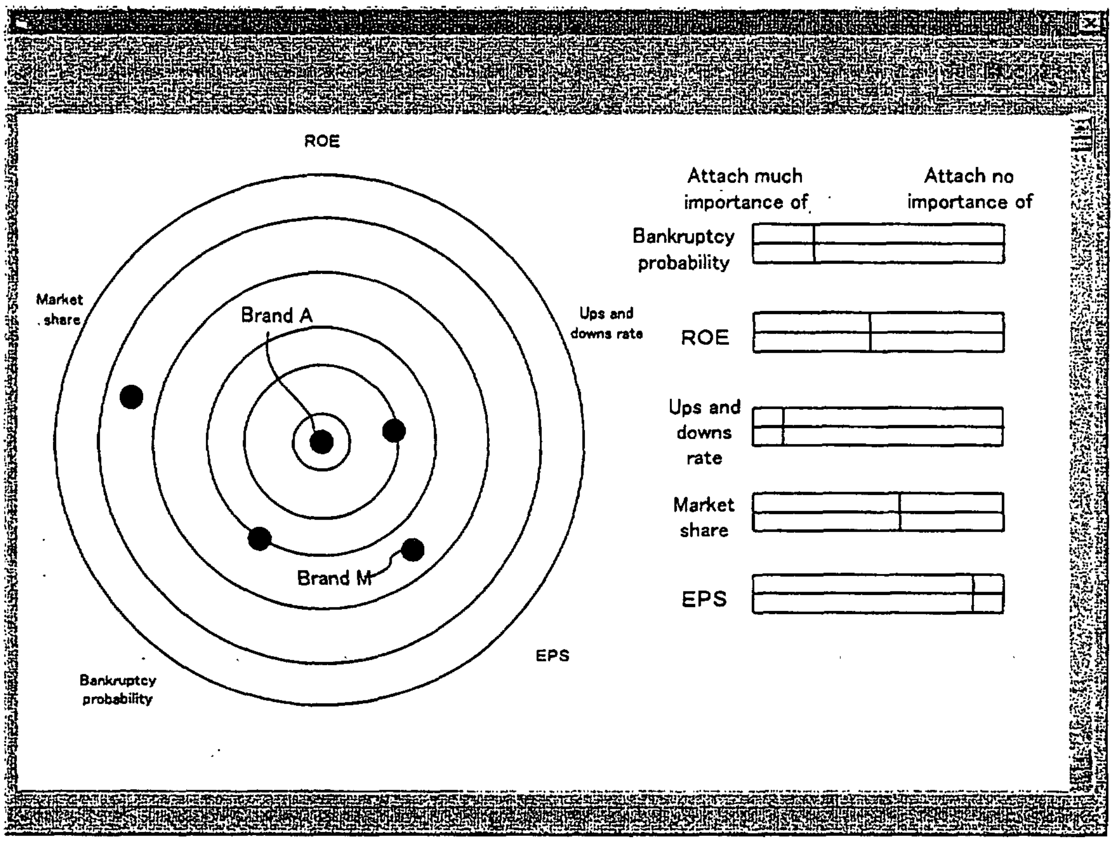
ROE
Market share
Brand A
Ups and downs rate
Brand M
EPS
Bankruptcy probability
Attach much importance of
Attach no importance of
Bankruptcy probability
ROE
Ups and downs rate
Market share
EPS

Fig. 26

| Order | Stock brand | High score parameter | Score difference |
|---|---|---|---|
| 1 | Brand A | ROE | 0 |
| 2 | Brand B | Ups and downs rate | 2 |
| 3 | Brand C | Bankruptcy probability | 5.5 |
| 4 | Brand M | EPS | 6 |
| 5 | Brand D | PBR | 8 |
| ⋮ | ⋮ | ⋮ | ⋮ |

Fig. 27

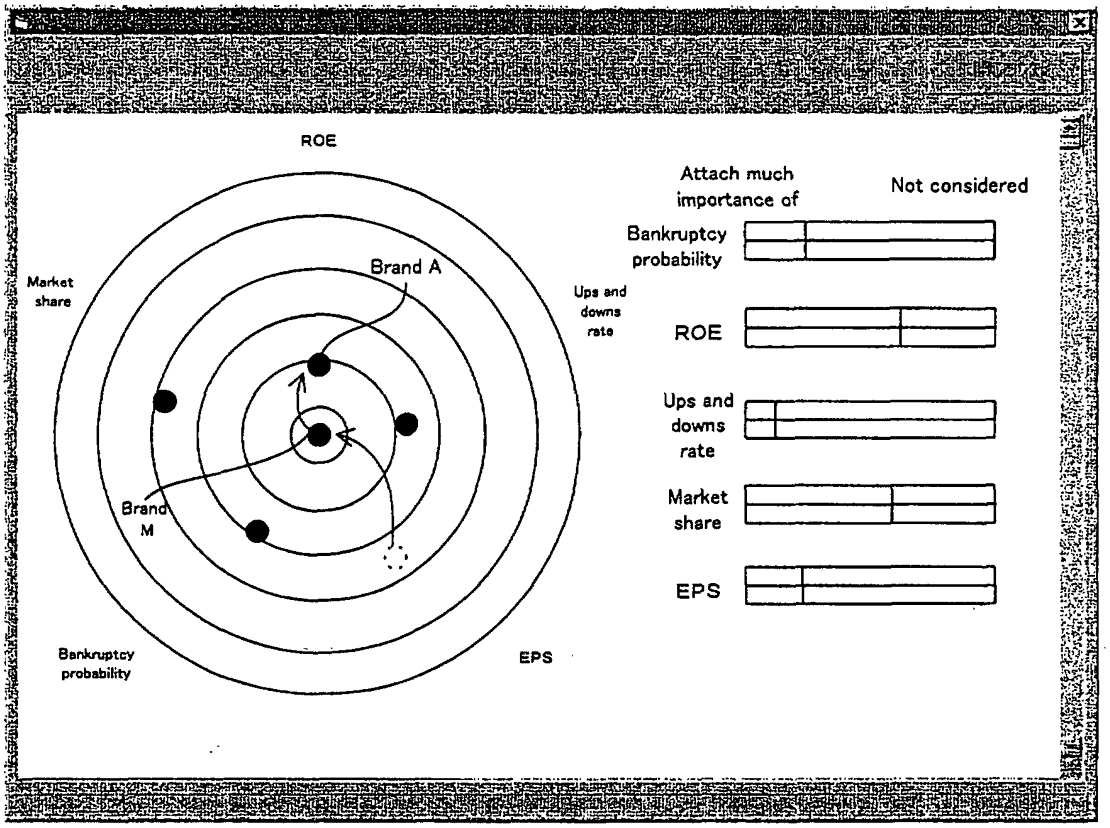
ROE
Market share
Brand A
Ups and downs rate
Brand M
Bankruptcy probability
EPS
Attach much importance of
Not considered
Bankruptcy probability
ROE
Ups and downs rate
Market share
EPS

**INTERNATIONAL SEARCH REPORT**

International application No.
PCT/JP01/05373

A. CLASSIFICATION OF SUBJECT MATTER
Int.Cl[7] G06F17/60, G06F17/30

According to International Patent Classification (IPC) or to both national classification and IPC

B. FIELDS SEARCHED

Minimum documentation searched (classification system followed by classification symbols)
Int.Cl[7] G06F17/60, G06F17/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 00/33212 A1 (BI, Fujun), 08 June, 2000 (08.06.00), page 9, lines 2 to 3; Figs. 4, 8(A) to 9; table 2 & AU 14316/99 A1 | 1-32 |
| Y | WO 99/27432 A1 (iBrain Software Inc.), 03 June, 1999 (03.06.99), Fig. 3 ("importance") (Family: none) | 1-32 |
| Y | US 5933145 A (Microsoft Corporation), 03 August, 1999 (03.08.99), column 7, line 22 to column 8, line 20 & US 6111574 A | 1-32 |
| Y | WO 99/30261 A1 (Financial Engines Inc.), 17 June, 1999 (17.06.99), Figs. 8 to 14(b) & AU 95061/98 A1 & EP 1038247 A1 & US 5918217 A | 1-32 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 September, 2001 (18.09.01) | 25 September, 2001 (25.09.01) |
| Name and mailing address of the ISA/ Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP01/05373

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-314959 A (Fuji Xerox Co., Ltd.),<br>29 November, 1996 (29.11.96),<br>Figs. 8 to 10<br>(Family: none) | 1-32 |
| Y | WO 98/35297 A1 (Personalogic Inc.),<br>13 August, 1998 (13.08.98),<br>Figs. 4 to 14<br>& US 6012051 A | 1-32 |
| Y | JP 2000-123046 A (Canon Inc.),<br>02 November, 2000 (02.11.00),<br>Figs. 7 to 9<br>(Family: none) | 30-32 |

Form PCT/ISA/210 (continuation of second sheet) (July 1992)